# EUROPÄISCHE PATENTSCHRIFT

(11) **EP 2 336 254 B1**
(45) Veröffentlichungstag und Bekanntmachung des Hinweises auf die Patenterteilung: **19.10.2011**
(21) Anmeldenummer: 09179971.8
(22) Anmeldetag: 18.12.2009
(51) Int. Cl.: C09D 133/06, C09J 133/06

(54) **Polymerdispersionen**
Polymer dispersions
Dispersions de polymères

(43) Veröffentlichungstag der Anmeldung: 22.06.2011
(73) Patentinhaber: BASF SE, 67056 Ludwigshafen (DE)
(72) Erfinder: Hartig, Jens, 67063, Ludwigshafen (DE); Balk, Roelof, 67459, Böhl-Iggelheim (DE); Dargatz, Manfred, 67549, Worms (DE)

(56) Entgegenhaltungen:
- WO-A1-2006/118974
- WO-A2-02/08297
- JP-A- 2007 045 948
- DATABASE WPI Week 200644 Thomson Scientific, London, GB; AN 2006-432948 XP002574677 & WO 2006/054611 A1 (NIPPON PAINT CO LTD) 26. Mai 2006 (2006-05-26)

## Beschreibung

Die vorliegende Erfindung betrifft Beschichtungsmassen, die Dispersionen von mehrstufig erhaltenen Polymeren enthalten, Verfahren zu deren Herstellung und deren Verwendung.

US 3957711 beschreibt einstufige Polymere mit einem Hydroxyalkyl(meth)acrylat als Schutzkolloid, das in situ hergestellt und gefolgt von der Polymerisation anderer Monomere wird.

US 7317056 beschreibt zweistufig hergestellte Polymere für druckempfindliche Klebstoffe, in deren erster Stufe ein hoher Anteil Acrylsäure und Hydroxyalkylacrylate einpolymerisiert wird. Die nach dem dort beschriebenen Verfahren zeigen eine hohe Viskosität, was eine Verringerung des Feststoffanteils in der fertigen Dispersion erforderlich macht.

E. P. Pedraza, M. D. Soucek, Polymer (2005), 46(24), 11174-85 beschreiben Latizes aus Kern-Schale Polymeren, deren Kern aus (Meth)acrylaten und Hydroxyethylmethacrylat und deren Schale aus (Meth)acrylaten und Methacrylsäure aufgebaut ist. Die Polymerisation liefert große Partikel mit einer gemittelten Partikelgröße von mehr als 300 nm und einer z.T. bimodalen Partikelgrößenverteilung.

Nachteilig ist, dass gemäß der Lehre dieser Schrift ein hoher Anteil von mehr als 4% Emulgatoren, bezogen auf die Summe der eingesetzten Monomere, notwendig ist.

G. Teng, M. D. Soucek, Journal of Polymer Science: Part A: Polymer Chemistry, Vol. 40, 4256-4265 (2002) beschreiben Latizes aus Kern-Schale Polymeren, deren Kerne und Schalen je entweder aus (Meth)acrylaten oder aus (Meth)acrylaten und Hydroxyethylmethacrylat aufgebaut sind. Die Polymerisation liefert große Partikel mit einer gemittelten Partikelgröße von mehr als 250 nm.

Nachteilig ist auch hier, dass gemäß der Lehre dieser Schrift ein hoher Anteil von mehr als 4% Emulgatoren bezogen auf die Summe der eingesetzten Monomere notwendig ist.

EP 1602701 A1 beschreibt die Polymerisation von Monomeren in Gegenwart eines Schutzkolloid, das aus bestimmten hydrophoben und hydrophilen Monomeren hergestellt wird. Nachteilig ist, daß gemäß der Lehre dieser Schrift ein hoher Anteil von mehr als 40% hydrophiler Monomere für die Polymerisation eingesetzt wird, was zu Polymeren mit einer lediglich geringen Wasserstabilität führt.

WO 2006/054611 A1 beschreibt Farben aus einer Acrylharzdispersion, einem Melamin-Formaldehyd-Harz und einem Pigment. Die beschriebene durch eine zweistufige Emulsionspolymerisation erhaltene Acrylharzdispersion weist eine hohe Säurezahl von 25 bis 200 mg KOH/g auf.

WO 2006/118974 A1 beschreibt ein zweistufiges Verfahren zur Herstellung wäßriger Latices mit einer Säurezahl von 10 bis 100 mg KOH/g in der ersten Stufe und einer Säurezahl von 0 bis 5 mg KOH/g in der zweiten Stufe sowie einer niedrigen Hydroxyzahl von 0 bis 5 mg KOH/g.

WO 02/08297 A2 beschreibt ein zweistufiges Verfahren zur Herstellung von Beschichtungsmassen, deren zweistufig aufgebaute Polymere in der zweiten Stufe größere Mengen an hydroxyfunktionellen und säurefunktionellen Monomeren enthalten als in der ersten Stufe.

JP 2007-045948 beschreibt Beschichtungsmassen aus zweistufig hergestellten Polyacrylatdispersionen und Melamin-Formaldehyd-Harzen, mit bestimmten Säurezahlen und Hydroxyzahlen.

WO 00/05276 beschreibt zweistufig hergestellte Polymere, in deren erster Stufe ein hoher Anteil Acrylsäure einpolymerisiert wird. Die nach dem dort beschriebenen Verfahren zeigen eine hohe Viskosität, was eine Verringerung des Feststoffanteils in der fertigen Dispersion erforderlich macht.

Aufgabe der vorliegenden Erfindung war es, Polymerdispersionen für Beschichtungsmassen zur Verfügung zu stellen, die in der Herstellung mit einer geringen Menge Emulgator auskommen, eine verringerte Viskosität zeigen und zu Beschichtungen mit einer guten Wasserstabilität führen.

Die Aufgabe wurde gelöst durch eine Beschichtungsmasse, enthaltend mindestens eine Polymerdispersion, erhältlich durch mindestens zweistufige Emulsionspolymerisation von

in einer ersten Stufe Umsetzung
(A1) mindestens eines (Meth)acrylsäurealkylesters,
(B1) optional mindestens eines Vinylaromaten mit bis zu 20 C-Atomen,
(C1) mindestens eines Hydroxyalkyl(meth)acrylats mit einer ein bis zehn Kohlenstoffatome umfassenden Alkylengruppe,
(D1) optional mindestens einer radikalisch polymerisierbaren Verbindung ausgewählt aus der Gruppe bestehend aus ethylenisch ungesättigten Nitrilen mit bis zu 20 C-Atomen, Vinylestern von bis zu 20 C-Atome enthaltenden Carbonsäuren, Vinylhalogeniden mit bis zu 10 C-Atomen und Vinylethern von 1 bis 10 C-Atome enthaltenden Alkoholen,
(E1) optional mindestens einer α,β-ethylenisch ungesättigten Carbonsäure,
(F1) optional mindestens einem Vernetzer,
(G1) optional mindestens einer Verbindung ausgewählt aus der Gruppe bestehend aus (Meth)acrylsäure 2-(2-oxo-imidazolidin-1-yl)-ethyl ester (Ureidoethyl (meth)acrylat), Acetoacetoxyethyl acrylat, Acetoacetoxypropyl methacrylat, Acetoacetoxybutyl methacrylat, 2-(Acetoacetoxy) ethyl methacrylat, Diacetonacrylamid (DAAM) und Diacetonmethacrylamid,
(H1) optional mindestens einer Verbindung mit einer (Meth)acrylat- und einer Epoxygruppe und
(I1) optional mindestens einem α,β-ethylenisch ungesättigten Carbonsäureamid,
in Gegenwart mindestens eines Initiators und in Gegenwart mindestens eines Emulgators sowie optional in Gegenwart mindestens eines Reglers,
mit der Maßgabe, daß das aus der ersten Stufe erhaltene Copolymer
- eine Säurezahl gemäß DIN EN ISO 3682 (potentiometrisch) von nicht mehr als 10 mg KOH/g Polymer,
- eine Hydroxyzahl gemäß DIN 53240-2 (potentiometrisch bei einer Acetylierungszeit von 20 Minuten) von 2 bis 100 mg KOH/g Polymer,
- eine Teilchengröße von 20 bis 80, bevorzugt 30 bis 60 nm und
- ein gewichtsmittleres Molekulargewicht, bestimmt über eine Größenausschlußchromatographie mit Tetrahydrofuran enthaltend 0,1 Gew% Trifluoressigsäure als Eluent bei einer Durchflußgeschwindigkeit von 1 ml/min und 35 °C Säulentemperatur, von 5.000 bis 50.000 g/mol
   aufweist,
   und die Summe der Monomere (C1) und (I1) von 0,5 bis 20 Gew% beträgt,
   gefolgt von einer radikalischen Polymerisation in einer Folgestufe in Gegenwart des in der ersten Stufe hergestellten Copolymers von

(A2) mindestens einem (Meth)acrylsäurealkylester,
(B2) optional mindestens einem Vinylaromaten mit bis zu 20 C-Atomen,
(C2) optional mindestens einem Hydroxyalkyl(meth)acrylat mit einer ein bis zehn Kohlenstoffatome umfassenden Alkylengruppe,
(D2) optional mindestens einer radikalisch polymerisierbaren Verbindung ausgewählt aus der Gruppe bestehend aus ethylenisch ungesättigten Nitrilen mit bis zu 20 C-Atomen, Vinylestern von bis zu 20 C-Atome enthaltenden Carbonsäuren, Vinylhalogeniden mit bis zu 10 C-Atomen und Vinylethern von 1 bis 10 C-Atome enthaltenden Alkoholen,
(E2) optional mindestens einer α,β-ethylenisch ungesättigten Carbonsäure,
(F2) optional mindestens einem Vernetzer und
(G2) optional mindestens einer Verbindung ausgewählt aus der Gruppe bestehend aus (Meth)acrylsäure 2-(2-oxo-imidazolidin-1-yl)-ethyl ester (Ureidoethyl (meth)acrylat), Acetoacetoxyethyl acrylat, Acetoacetoxypropyl methacrylat, Acetoacetoxybutyl methacrylat, 2-(Acetoacetoxy) ethyl methacrylat, Diacetonacrylamid (DAAM) und Diacetonmethacrylamid,
(H2) optional mindestens einer Verbindung mit einer (Meth)acrylat- und einer Epoxygruppe und
(I2) optional mindestens einem α,β-ethylenisch ungesättigten Carbonsäureamid,
optional gefolgt von einer oder mehreren weiteren Stufen einer radikalischen Polymerisation mindestens eines Monomeren,
wobei die Menge des mindestens einen Emulgators 0,1 bis 3,5 Gew% beträgt, bezogen auf die Gesamtmenge der in allen Stufen in die radikalische Polymerisation eindosierten radikalisch polymerisierbaren Monomere,
mit der Maßgabe, daß
- das Gewichtsverhältnis der Summe der Monomere der ersten Stufe (A1) bis (I1) zur Summe der Monomere der Folgestufen (A2) bis (I2) von 5:95 bis 70:30 beträgt,
- das aus der letzten Stufe erhaltene Produkt eine Teilchengröße von 50 bis 300 nm aufweist,
- die Säurezahl des Produktes der letzten Stufe nicht höher ist als die Säurezahl des Produktes der ersten Stufe und
- die Hydroxyzahl des Produktes der letzten Stufe nicht höher ist als die Hydroxyzahl des Produktes der ersten Stufe.

Ein weiterer Gegenstand der vorliegenden Erfindung ist ein Verfahren wie im Anspruch 10 definiert.

In die Polymerisation können erfindungsgemäß folgende Monomere eingesetzt werden:

### (Meth)acrylsäurealkylester (A1) und (A2)

Dies umfaßt bevorzugt solche (Meth)acrylsäurealkylester, deren linearer oder verzweigter Alkylrest 1 bis 20 Kohlenstoffatome aufweist, besonders bevorzugt 1 bis 10, ganz besonders bevorzugt 1 bis 8 und insbesondere 1 bis 4 Kohlenstoffatome.

Zu nennen als Beispiele für (Meth)acrylsäurealkylester sind (Meth)acrylsäuremethylester, (Meth)acrylsäureethylester, (Meth)acrylsäure-n-propylester, (Meth)acrylsäure-n-butylester, (Meth)acrylsäure-iso-butylester, (Meth)acrylsäure-sek-butylester, (Meth)acrylsäure-n-pentylester, (Meth)acrylsäure-isopentylester, (Meth)acrylsäure-2-methyl-butylester, (Meth)acrylsäureamylester, (Meth)acrylsäure-n-hexylester, (Meth)acrylsäure-2-ethylbutylester, (Meth)acrylsäurepentylester, (Meth)acrylsäure-n-heptylester, (Meth)acrylsäure-n-octylester, (Meth)acrylsäure-2-ethylhexylester, (Meth)acrylsäure-2-propylheptylester, (Meth)acrylsäure-n-decylester, (Meth)acrylsäureundecylester und (Meth)acrylsäure-n-dodecylester.

Bevorzugt sind Methylmethacrylat, Methylacrylat, Ethylacrylat, n-Butylacrylat, n-Hexylacrylat, n-Octylacrylat, 2-Ethylhexylacrylat und 3-Propylheptylacrylat.

Insbesondere sind auch Mischungen der (Meth)acrylsäurealkylester geeignet.

### Vinylaromaten mit bis zu 20 C-Atomen (B1) und (B2)

Dabei handelt es sich um optional substituierte aromatische Systeme mit einer Vinylgruppe, die sich in Konjugation zum aromatischen Ringsystem befindet.

Solche substituierten Vinylaromaten weisen eine oder mehrere, bevorzugt eine 1 bis 10 Kohlenstoffatome, bevorzugt 1 bis 6 und besonders bevorzugt 1 bis 4 Kohlenstoffatome aufweisende lineare oder verzweigte Alkylgruppe auf, die sich am Aromaten oder an der Vinylgruppe befinden kann. Befindet sich der Substituent am Aromaten, so kann sich der Substituent bevorzugt in ortho- oder para-Position, besonders bevorzugt in para-Position zur Vinylgruppe befinden.

Als vinylaromatische Verbindungen kommen Vinyltoluol, Vinylnaphthalin, α- und p-Methylstyrol, α-Butylstyrol, 4-n-Butylstyrol, 4-n-Decylstyrol und vorzugsweise Styrol und α-Methylstyrol in Betracht.

### Hydroxyalkyl(meth)acrylat (C1) und (C2)

Bei den Hydroxyalkyl(meth)acrylaten handelt es sich um solche (Meth)acrylsäureester, deren Alkylengruppe ein bis 10, bevorzugt 2 bis 8, besonders bevorzugt 2 bis 6, ganz besonders bevorzugt 2 bis 4 und insbesondere 2 oder 3 Kohlenstoffatome umfaßt.

Bevorzugte Hydroxyalkyl(meth)acrylate sind beispielsweise (Meth)acrylsäure-2-hydroxyethylester, (Meth)acrylsäure-2-hydroxypropylester, (Meth)acrylsäure-3-hydroxypropylester und (Meth)acrylsäure-4-hydroxybutylester.

Besonders bevorzugt sind (Meth)acrylsäure-2-hydroxyethylester und (Meth)acrylsäure-2-hydroxypropylester, ganz besonders bevorzugt ist (Meth)acrylsäure-2-hydroxyethylester.

Denkbar sind auch solche Hydroxyalkyl(meth)acrylate, die mehr als eine Hydroxygruppe aufweisen, beispielsweise zwei bis fünf, bevorzugt zwei bis vier, besonders bevorzugt zwei bis drei. Beispiele dafür sind Glycerinmono(meth)acrylat, Trimethylolpropanmono(meth)acrylat, Pentaerythritmono(meth)acrylat und Mono(meth)acrylate von Zuckeralkoholen, wie beispielsweise Sorbit, Mannit, Diglycerol, Threit, Erythrit, Adonit (Ribit), Arabit (Lyxit), Xylit, Dulcit (Galactit), Maltit und Isomalt.

### Radikalisch polymerisierbaren Verbindung (D1) und (D2)

Die Verbindungen (D1) und (D2) sind ausgewählt aus der Gruppe bestehend aus ethylenisch ungesättigten Nitrilen mit bis zu 20 C-Atomen, Vinylestern von bis zu 20 C-Atome enthaltenden Carbonsäuren, Vinylhalogeniden mit bis zu 10 C-Atomen und Vinylethern von 1 bis 10 C-Atome enthaltenden Alkoholen, bevorzugt ausgewählt aus der Gruppe bestehend aus ethylenisch ungesättigten Nitrilen mit bis zu 20 C-Atomen und Vinylethern von 1 bis 10 C-Atome enthaltenden Alkoholen und besonders bevorzugt handelt es sich um ethylenisch ungesättigten Nitrilen mit bis zu 20 C-Atomen.

### Ethylenisch ungesättigte Nitrile mit bis zu 20 C-Atomen

Beispiele für ethylenisch ungesättigte Nitrile sind Fumarsäuredinitril, Acrylnitril und Methacrylnitril, bevorzugt Acrylnitril und Methacrylnitril und besonders bevorzugt Acrylnitril.

### Vinylester von bis zu 20 C-Atome enthaltenden Carbonsäuren

Vinylester von Carbonsäuren mit 1 bis 20 C-Atomen sind z.B. Vinyllaurat, Vinylstearat, Vinylpropionat, Versaticsäurevinylester, Vinylbutyrat und Vinylacetat, bevorzugt Vinylacetat.

### Vinylhalogenide mit bis zu 10 C-Atomen

Die Vinylhalogenide sind mit Chlor, Fluor oder Brom substituierte ethylenisch ungesättigte Verbindungen, bevorzugt Vinylchlorid und Vinylidenchlorid.

### Vinylether von 1 bis 10 C-Atome enthaltenden Alkoholen

Als Vinylether zu nennen sind z.B. Methylvinylether, Ethylvinylether, n-Propylvinylether, iso-Propylvinylether, n-Butylvinylether, sek-Butylvinylether, iso-Butylvinylether, *tert-*Butylvinylether und n-Octylvinylether. Bevorzugt wird Vinylether von 1 bis 4 C-Atome enthaltenden Alkoholen.

### α,β-Ethylenisch ungesättigten Carbonsäure (E1) und (E2)

Dabei handelt es sich um 3 bis 10, bevorzugt 3 bis 6, besonders bevorzugt 3 bis 4 Kohlenstoffatome aufweisende α,β-ethylenisch ungesättigten Carbonsäuren.

Bevorzugt sind (Meth)acrylsäure, Crotonsäure oder Dicarbonsäuren, z.B. Itaconsäure, Maleinsäure oder Fumarsäure, besonders bevorzugt Methacrylsäure und Acrylsäure.

(Meth)Acrylsäure steht in dieser Beschreibung für Methacrylsäure und Acrylsäure.

### Vernetzer (F1) und (F2)

Vernetzer sind solche, die mindestens zwei radikalisch polymerisierbare Doppelbindungen aufweisen, bevorzugt 2 bis 6, besonders bevorzugt 2 bis 4, ganz besonders bevorzugt 2 bis 3 und insbesondere genau 2.

Als Beispiele genannt seien für Di- und Poly(meth)acrylate 1,2-, 1,3- und 1,4-Butandioldiacrylat, 1,2- und 1,3-Propylenglykol(meth)acrylat, 1,6-Hexandioldi(meth)acrylat, 1,2-Ethylenglykoldi(meth)acrylat, Neopentylglykoldi(meth)acrylat, Diethylenglykoldi(meth)acrylat, Triethylenglykoldi(meth)acrylat, Tetraethylenglykoldi(meth)acrylat, Trimethylolpropantri(meth)acrylat, Trimethylolethantri(meth)acrylat, Pentaerythritoltri- und -tetra(meth)acrylat.

Ferner erwähnt sei Divinylbenzol.

Besonders bevorzugt sind die Vernetzer ausgewählt aus der Gruppe bestehend aus Divinylbenzol, 1,4-Butandioldiacrylat und Allylmethacrylat.

Wenn Verbindungen (F1) und (F2) eingesetzt werden, so werden diese bevorzugt in der zweiten Stufe und nicht in der ersten Stufe eingesetzt, d.h. wenn die Menge an ((F1) + (F2)) ≠ 0 ist, so ist bevorzugt die Menge an (F2) ≠ 0 und (F1) = 0.

Verbindungen (G1) und (G2) sind ausgewählt aus der Gruppe bestehend aus (Meth)acrylsäure 2-(2-oxo-imidazolidin-1-yl)-ethyl ester (Ureidoethyl (meth)acrylat), N-[2-(2-oxo-oxazolidin-3-yl)-ethyl]-methacrylat, Acetoacetoxyethyl acrylat, Acetoacetoxypropyl methacrylat, Acetoacetoxybutyl methacrylat, 2-(Acetoacetoxy) ethyl methacrylat, Diacetonacrylamid (DAAM) und Diacetonmethacrylamid.

Bevorzugt sind (Meth)acrylsäure 2-(2-oxo-imidazolidin-1-yl)-ethyl ester, (Acetoacetoxy) ethyl methacrylat und Diacetonacrylamid, besonders bevorzugt sind (Meth)acrylsäure 2-(2-oxo-imidazolidin-1-yl)-ethyl ester und (Acetoacetoxy) ethyl methacrylat und ganz besonders bevorzugt ist Diacetonacrylamid.

Wenn Verbindungen (G1) und (G2) eingesetzt werden, so werden diese bevorzugt in der ersten Stufe und nicht in der zweiten Stufe eingesetzt, d.h. wenn die Menge an ((G1) + (G2)) ≠ 0 ist, so ist bevorzugt die Menge an (G1) ≠ 0 und (G2) = 0.

### (H1) und (H2)

Bei diesen Verbindungen handelt es sich um mindestens eine Verbindung mit einer (Meth)acrylat- und einer Epoxygruppe. Insbesondere zu erwähnen sind Glycidylacrylat und Glycidylmethacrylat, bevorzugt Glycidylmethacrylat.

### (I1) und (12)

Bei diesen Verbindungen handelt es sich um mindestens ein α,β-ethylenisch ungesättigtes Carbonsäureamid, bevorzugt um ein Amid der unter (C1) und (C2) bezeichneten Carbonsäuren.

Besonders bevorzugt sind (Meth)acrylsäureamid, Crotonsäureamid oder Amide von Dicarbonsäuren, z.B. Itaconsäurediamid, Maleinsäurediamid oder Fumarsäurediamid, besonders bevorzugt Methacrylsäureamid und Acrylsäureamid, ganz besonders bevorzugt Acrylsäureamid.

Wenn Verbindungen (I1) und (12) eingesetzt werden, so werden diese bevorzugt in der ersten Stufe und nicht in der zweiten Stufe eingesetzt, d.h. wenn die Menge an ((I1) + (I2)) ≠ 0 ist, so ist bevorzugt die Menge an (11) * 0 und (12) = 0.

Es können weiterhin in untergeordneten Mengen, beispielsweise in weniger als 5 Gew%, bevorzugt weniger als 3 Gew%, besonders bevorzugt weniger als 1 Gew%, ganz besonders bevorzugt 0 Gew% andere als die oben aufgeführten Monomere eingesetzt werden, was jedoch weniger bevorzugt ist.

Die Monomerzusammensetzung der ersten Stufe ist in der Regel wie folgt:
(A1) 30 bis 99,5, bevorzugt 40 bis 99, besonders bevorzugt 50 bis 97 Gew% mindestens eines (Meth)acrylsäurealkylesters
(B1) 0 bis 70, bevorzugt 5 bis 60, besonders bevorzugt 10 bis 50 Gew% mindestens eines Vinylaromaten mit bis zu 20 C-Atomen,
(C1) 0,5 bis 20, bevorzugt 1 bis 15, besonders bevorzugt 3 bis 10 Gew% mindestens eines Hydroxyalkyl(meth)acrylats,
(D1) 0 bis 20, bevorzugt 0 bis 10, besonders bevorzugt 0 bis 5 und ganz besonders bevorzugt 0 Gew% mindestens einer radikalisch polymerisierbaren Verbindung ausgewählt aus der Gruppe bestehend aus ethylenisch ungesättigten Nitrilen mit bis zu 20 C-Atomen, Vinylestern von bis zu 20 C-Atome enthaltenden Carbonsäuren, Vinylhalogeniden mit bis zu 10 C-Atomen und Vinylethern von 1 bis 10 C-Atome enthaltenden Alkoholen, und
(E1) 0 bis 5, bevorzugt 0 bis 3, besonders bevorzugt 0 bis 1, ganz besonders bevorzugt 0 bis 0,5 und insbesondere 0 Gew% mindestens einer α,β-ethylenisch ungesättigten Carbonsäure,
(F1) 0 bis 20, bevorzugt 0 bis 10, besonders bevorzugt 0 bis 5 und ganz besonders bevorzugt 0 Gew%
(G1) 0 bis 20, bevorzugt 0 bis 10, besonders bevorzugt 0 bis 5 und ganz besonders bevorzugt 0 Gew%
(H 1) 0 bis 20, bevorzugt 0 bis 10, besonders bevorzugt 0 bis 5 und ganz besonders bevorzugt 0 Gew%
(I1) 0 bis 19,5, bevorzugt 0 bis 10, besonders bevorzugt 0 bis 5 und ganz besonders bevorzugt 0 Gew%
wobei die Summe, bezogen auf die in die erste Stufe eingesetzten Monomere, immer 100 Gew% ergibt und die Menge des Monomeren (E1) so bemessen ist, daß das aus der ersten Stufe erhaltene Polymer eine Säurezahl von nicht mehr als 10 mg KOH/g, bevorzugt nicht mehr als 8, besonders bevorzugt nicht mehr als 5, ganz besonders bevorzugt nicht mehr als 3, insbesondere nicht mehr als 1 mg KOH/g und speziell von 0 mg KOH/g aufweist mit der Maßgabe, daß die Summe der Monomere (C1) und (I1) von 0,5 bis 20 Gew%, bevorzugt von 0,5 bis 15, besonders bevorzugt von 0,5 bis 10 und ganz besonders bevorzugt von 1 bis 10 Gew% beträgt.

Die Säurezahl wird in dieser Schrift, wenn nicht anders angegeben, gemäß DIN EN ISO 3682 (potentiometrisch) bestimmt.

Die Hydroxyzahl des aus der ersten Stufe erhaltenen Polymers beträgt von 2 bis 100 mg KOH/g, bevorzugt von 5 bis 80 und besonders bevorzugt von 10 bis 60 mg KOH/g.

Die Hydroxyzahl wird in dieser Schrift, wenn nicht anders angegeben, gemäß DIN 53240-2 (potentiometrisch bei einer Acetylierungszeit von 20 Minuten) bestimmt.

Die Teilchengröße des aus der ersten Stufe erhaltenen Polymers beträgt von 20 bis 80 nm, bevorzugt 30 bis 60 nm.

Als Teilchengröße wird in dieser Schrift der gewichtsmittlere Durchmesser der Polymerpartikel in der Dispersion (bestimmt gemäß ISO13321 mit einem High Performance Particle Sizer von der Fa. Malvern bei 22 °C und einer Wellenlänge von 633 nm) verstanden.

Das gewichtsmittlere Molekulargewicht Mw des aus der ersten Stufe erhaltenen Polymers beträgt von 5.000 bis 50.000 g/mol, bevorzugt von 7.000 bis 40.000, besonders bevorzugt von 8.000 bis 30.000 und ganz besonders bevorzugt von 10.000 bis 25.000.

In dieser Schrift wird das gewichtsmittlere Molekulargewicht Mw, wenn nicht anders angegeben, bestimmt über eine Größenausschlußchromatographie (size exclusion chromatography, SEC) mit Tetrahydrofuran + 0,1 Gew% Trifluoressigsäure als Eluent bei einer Durchflußgeschwindigkeit von 1 ml/min und 35 °C Säulentemperatur. Die Probe wird im Eluenten auf eine Konzentration von 2 mg/ml verdünnt und 100 µl davon injiziert, nachdem die Probelösung über ein 0,2 µm Filter (Sartorius Minisart® SRP 25) zur Entfernung eines etwaigen Gelanteils filtriert wurde. Als Säulen wurden drei Säulen mit einem inneren Durchmesser von 7,5 mm kombiniert wie folgt: 5 cm Vorsäule (Plgel 10µ Guard Vorsäule) gefolgt von zwei 30 cm Trennsäulen (jeweils Plgel 10µ Mixed B). Die Detektion erfolgte mittels eines Differentialrefraktometers Agilent® 1100, UV-Photometer Agilent® 1100 VWD, PSS SLD7000-BI-MwA (UV/254 nm/Agilent). Die Kalibrierung erfolgte mit eng verteiltem Polystyrol-Standards der Fa. Polymer Laboratories mit Molekulargewichten von M = 580 bis M = 7.500.000, sowie Hexylbenzol (M = 162). Die Werte außerhalb des Elutionsbereichs wurden extrapoliert.

Durch die der Molekulargewichtsbestimmung vorgeschalteten Filtration wird ein etwaiger Gelanteil des Polymeren entfernt, so daß sich die angegebenen Werte auf den Solanteil beziehen.

Der unlösliche Anteil des Polymeren kann bestimmt werden durch vierstündige Extraktion mit Tetrahydrofuran in einer Soxhlet-Apparatur und, nach Trocknung des Rückstandes bis zur Gewichtskonstanz, Wägung des verbliebenen Rückstandes.

Nach der ersten Stufe sind die eingesetzten Monomeren zu mindestens 90%, bevorzugt mindestens 95% und besonders bevorzugt zu mindestens 98% abreagiert.

Der Monomerenzulauf in die zweite Stufe und optional weitere darauf folgende Stufen ist in der Regel wir folgt:
(A2) 1 bis 100, bevorzugt 2 bis 95, besonders bevorzugt 5 bis 90 Gew%, ganz besonders bevorzugt 10 bis 80 Gew% mindestens eines (Meth)acrylsäurealkylesters,
(B2) 0 bis 70, bevorzugt 0 bis 60, besonders bevorzugt 0 bis 50 Gew% mindestens eines Vinylaromaten mit bis zu 20 C-Atomen,
(C2) 0 bis 20, bevorzugt 0 bis 15, besonders bevorzugt 0 bis 10 Gew% mindestens eines Hydroxyalkyl(meth)acrylats,
(D2) 0 bis 40, bevorzugt 0 bis 30, besonders bevorzugt 0 bis 25 und ganz besonders bevorzugt 0 bis 20 Gew% mindestens einer radikalisch polymerisierbaren Verbindung ausgewählt aus der Gruppe bestehend aus ethylenisch ungesättigten Nitrilen mit bis zu 20 C-Atomen, Vinylestern von bis zu 20 C-Atome enthaltenden Carbonsäuren, Vinylhalogeniden mit bis zu 10 C-Atomen und Vinylethern von 1 bis 10 C-Atome enthaltenden Alkoholen,
(E2) 0 bis 5, bevorzugt 0 bis 3, besonders bevorzugt 0 bis 1, ganz besonders bevorzugt 0 bis 0,5 und insbesondere 0 Gew% mindestens einer α,β-ethylenisch ungesättigten Carbonsäure,
(F2) 0 bis 3,5 Gew%, bevorzugt 0 bis 2,5, besonders bevorzugt 0 bis 1,5 und ganz besonders bevorzugt 0 bis 1 Gew% mindestens eines Vernetzers und
(G2) 0 bis 10, bevorzugt 1 bis 10, besonders bevorzugt 2 bis 10, ganz besonders bevorzugt 5 bis 10 Gew%,
(H2) 0 bis 20, bevorzugt 0 bis 10, besonders bevorzugt 0 bis 5 und ganz besonders bevorzugt 0 Gew%
(12) 0 bis 20, bevorzugt 0 bis 10, besonders bevorzugt 0 bis 5 und ganz besonders bevorzugt 0 Gew%
wobei die Summe, bezogen auf die in die zweite und weitere Stufen dosierten Monomere, immer 100 Gew% ergibt.

Das Gewichtsverhältnis der Summe der Monomere der ersten Stufe (A1) bis (I1) zur Summe der Monomere der zweiten und weiteren Stufe (A2) bis (I2) beträgt von 5:95 bis 70:30, bevorzugt von 10:90 bis 70:30, besonders bevorzugt von 20:80 bis 65:35, ganz besonders bevorzugt von 30:70 bis 60:40 und insbesondere von 40:60 bis 60:40.

Dieser zweiten Stufe können sich optional noch eine oder mehrere Stufen einer radikalischen Polymerisation mit einem oder mehreren der Monomer (A2) bis (12) anschließen.

Das aus der letzten Stufe erhaltene Produkt weist in der Regel eine Teilchengröße von 50 bis 300 nm, bevorzugt von 60 bis 250, besonders bevorzugt von 70 bis 200 nm.

Das aus der letzten Stufe erhaltene Produkt weist in der Regel ein gewichtsmittleres Molekulargewicht Mw bezogen auf den Solanteil von 50.000 bis 300.000 g/mol auf.

In der Regel sind die Teilchen des aus der letzten Stufe erhaltenen Produktes umso kleiner, je mehr Emulgator und je mehr Produkt aus der ersten Stufe anwesend ist.

Die Polymerdispersionen lassen sich in an sich bekannter Weise nach den allgemein bekannten Verfahren der Emulsionspolymerisation aus den Monomeren unter Verwendung der üblichen Emulgier- und Dispergierhilfsmittel und Polymerisationsinitatoren herstellen.

Als Dispergiermittel für die Durchführung von radikalisch wässerigen Emulsionspolymerisationen kommen üblicherweise eingesetzten Emulgatoren in Mengen von 0,1 bis 3,5 Gew.-%, bevorzugt von 0,1 bis 3 Gew.-% besonders bevorzugt von 0,1 bis 2, ganz besonders bevorzugt von 0,1 bis 1,5 und insbesondere 0,1 bis 1 Gew%, bezogen auf die Gesamtmenge der in allen Stufen in die radikalische Polymerisation eindosierten radikalisch polymerisierbaren Monomere, in Betracht.

Als Emulgatoren im Sinne der vorliegenden Schrift werden solche Verbindungen bezeichnet, die in der Lage sind durch Verringerung der Grenzflächenspannung zwischen einer organischen und eine wäßrigen Phase eine Dispersion dieser Phasen zu stabilisieren.

Weitere gebräuchliche Emulgatoren sind z.B. Ammonium- oder Alkalimetallsalze von C₈ bis C₂₀-Alkylsulfonaten, -sulfaten, -phosphonaten, -phosphaten und -carboxylaten, wie z.B. höherer Fettalkoholsulfate wie Na-n-Laurylsulfat, oder von C₈ bis C₂₀-Alkylbenzolsulfonaten, -sulfaten, -phosphonaten, -phosphaten und -carboxylaten, alkoxylierte, bevorzugt ethoxylierte C₈ bis C₁₂Alkylphenole mit einem Ethoxylierungsgrad von 3 bis 30 sowie alkoxylierte, bevorzugt ethoxylierte C₈ bis C₂₅-Fettalkohole mit einem Ethoxylierungsgrad von 5 bis 50. Diese alkoxylierten Alkohole können auch verestert vorliegen als Sulfat, Sulfonat, Phosphat, Polyphosphat oder Phosphonat mit Ammonium- oder Alkalimetallionen als Gegenionen.

Weitere geeignete Emulgatoren sind in Houben-Weyl, Methoden der organischen Chemie, Band XIV, Makromolekulare Stoffe, Georg Thieme Verlag, Stuttgart, 1961, Seiten 192 bis 209 aufgeführt.

Mit Vorteil handelt es sich bei den erfindungsgemäß eingesetzten Emulgatoren um ionische, insbesondere um anionische Emulgatoren oder Kombinationen davon.

In einer bevorzugten Ausführungsform werden als Emulgatoren solche eingesetzt, die bei der radikalischen Polymerisation in das Polymer eingebaut werden. Dabei handelt es sich in der Regel um Verbindungen, die mindestens eine radikalisch polymerisierbare Gruppe tragen, bevorzugt ausgewählt aus der Gruppe bestehend aus Allyl, Acrylat, Methacrlyat und Vinylether, und mindestens einer emulgierend wirkenden Gruppe, bevorzugt ausgewählt aus der oben angegebenen Gruppe.

Dies sind beispielsweise einbaubare Emulgatoren der Marken Bisomer® MPEG 350 MA der Firma Laporte, Hitenol® BC-20 (APEO), Hitenol® BC-2020, Hitenol® KH-10 oder Noigen® RN-50 (APEO) der Firma Dai-Ichi Kogyo Seiyaku Co., Ltd., Maxemul® 6106, Maxemul® 6112, Maxemul® 5010, Maxemul® 5011 der Firma Croda, Sipomer® PAM 100, Sipomer® PAM 200, Sipomer® PAM 300, Sipomer® PAM 4000, Sipomer® PAM 5000 der Firma Rhodia, Adeka® Reasoap® PP-70, Adeka® Reasoap® NE-10, Adeka® Reasoap® NE-20, Adeka® Reasoap® NE-30, Adeka® Reasoap® NE-40, Adeka® Reasoap® SE-10N, Adeka® Reasoap® SE-1025A, Adeka® Reasoap® SR-10, Adeka® Reasoap® SR-1025, Adeka® Reasoap® SR-20, Adeka® Reasoap® ER-10, Adeka® Reasoap® ER-20, Adeka® Reasoap® ER-30, Adeka® Reasoap® ER-40 der Firma Adeka, Pluriol® A 010 R, Pluriol® A 12 R, Pluriol® A 23 R, Pluriol® A 46 R, Pluriol® A 750 R, Pluriol® A 950 R, Pluriol® A 590 I, Pluriol® A 1190 I, Pluriol® A 590 V, Pluriol® A 1190 V, Pluriol® A 5890 V, Pluriol® A 308 R und DAA ES 8761 der Firma BASF, Latemul® S 180 A und Latemul ®S 180 der Firma Kao, Eleminol® JS-2 der Firma Sanyou Kasei, Aquaron® HS-1025 der Firma Daiichi Kogyou Seiyaku sowie C12-AMPS der Firma Lubrizol.

Als Polymerisationsinitiatoren kommen alle diejenigen im Betracht, die in der Lage sind, eine radikalische Emulsionspolymerisation in wässerigen Medien auszulösen. Sie werden im allgemeinen in Mengen von 0,1 bis 10 Gew.-%, vorzugsweise von 0,2 bis 4 Gew.-%, bezogen auf die Monomeren, eingesetzt. Übliche Verbindungen sind anorganische Peroxide, z.B. Natrium- und Ammoniumperoxidisulfat und Wasserstoffperoxid, organische Peroxide wie Dibenzoylperoxid oder tert.-Butylhydroperoxid sowie Azoverbindungen wie Azoisobuttersäuredinitril. Diese Initiatoren sind für die bei den radikalischen Emulsionspolymerisationen üblichen Reaktionstemperaturen von 50 bis 100°C geeignet. Werden niedrigere Reaktionstemperaturen von 40 bis 60°C gewünscht, sind Redoxsysteme wie Kombinationen aus Perverbindungen und einem reduzierenden Co-Initiator dem Natriumsalz der Hydroxymethansulfinsäure, Ascorbinsäure oder Eisen-II-salzen vorzuziehen.

Die Herstellung wäßriger Polymerisatdispersionen nach dem Verfahren der radikalischen Emulsionspolymerisation ist an sich bekannt (vgl. Houben-Weyl, Methoden der organischen Chemie, Band XIV, Makromolekulare Stoffe, I.c., Seiten 133ff).

Besonders bewährt hat sich ein Zulauf-Verfahren, bei dem man von einer Vorlage, bestehend aus einem Teil der Monomeren, im allgemeinen bis zu 20 Gew.-%, Wasser, Emulgator und Initiator ausgeht. Der Rest der Monomeren und gegebenenfalls Regler in emulgierter Form sowie zusätzlich eine wässerige Lösung weiteren Polymerisationsinitiators werden nach Maßgabe der Polymerisation zugesetzt.

Dabei können die Monomere auf mehrere Zuläufe verteilt werden und mit variabler Dosierungsgeschwindigkeit und/oder variablem Gehalt an einem oder mehreren Monomeren versehen werden.

In einer möglichen Ausführungsform können unterschiedliche Vernetzungsgrade des Innen- und Außenbereichs hergestellt werden, indem im Reaktionsgemisch die Konzentration an Monomeren und Vernetzern weitgehend konstant gelassen wird, jedoch die Menge an Regler (Chain Transfer Agent, Kettenübertragungsmittel) variiert wird.

Durch die Anwesenheit von Reglern in einer Polymerisierung wird durch Kettenabbruch und Start einer neuen Kette durch das so entstandene neue Radikal in der Regel das Molekulargewicht des entstehenden Polymers verringert und bei Anwesenheit von Vernetzern auch die Anzahl der Vernetzungsstellen (Vernetzungsdichte) verringert. Wird im Verlauf einer Polymerisierung die Konzentration an Regler erhöht, so wird die Vernetzungsdichte im Verlauf der Polymerisierung weiter verringert.

Derartige Molekulargewichtsregler sind bekannt, beispielsweise kann es sich um Mercaptoverbindungen handeln, wie bevorzugt tertiäres Dodecylmercaptan, n-Dodecylmercaptan, iso-Octylmercaptopropionsäure, Mercaptopropionsäure, dimeres α-Methylstyrol, 2-Ethylhexyl-thioglykolsäureester (EHTG), 3-Mercaptopropyltrimethoxysilan (MTMO) oder Terpinolen. Die Molekulargewichtsregler sind bekannt und beispielsweise beschrieben in Houben-Weyl, Methoden der organischen Chemie, Bd. XIV/1, S. 297 ff., 1961, Stuttgart.

In einer bevorzugten Ausführungsform der vorliegenden Erfindung kann die Polymerisierung durchgeführt werden wie in EP 853 636 oder in US 3804881 beschrieben. Auf die Offenbarung dieser beiden Dokumente sei hiermit durch Referenznahme ausdrücklich Bezug genommen.

Die so erhaltenen wäßrigen Polymerdispersion haben vorzugsweise einen Feststoffgehalt von 35 bis 65, besonders bevorzugt von 38 bis 55 Gew.-%.

Die Polymerdispersionen zeichnen sich durch eine hohe Stabilität aus, es kommt kaum zu Koagulatbildungen. Bei gleicher Hydroxyzahl, gleichem Festkörpergehalt und gleichem Molekulargewicht weisen die erfindungsgemäßen Polymerdispersionen eine geringere Viskosität als vergleichbare Polymerdispersionen auf, die nicht erfindungsgemäß erhalten worden sind.

Die Glasübergangstemperatur Tg, wird in dieser Schrift bevorzugt bestimmt gemäß ISO 11357-2-3-7 über Differential Scanning Calorimetry (DSC), bevorzugt mit einer Aufheizrate von 20 °C/min.

In einer bevorzugten Ausführungsform weist das aus der ersten Stufe erhaltene Copolymer eine Glasübergangstemperatur von 40 bis 150 °C, bevorzugt 50 bis 120 °C besonders bevorzugt 50 bis 100 °C und das aus der letzten (zweiten) Stufe erhaltene Produkt eine um mindestens 40 °C niedrigere Glasübergangstemperatur auf. Derartige Polymerdispersionen können mit Vorteil in Beschichtungsmassen zur Beschichtung von Substraten eingesetzt werden.

Die Mindestfilmbildetemperatur (MFT) solcher für Beschichtungsmassen eingesetzten Polymerdispersionen beträgt vorteilhaft nicht mehr als 5 °C. Dabei sind die erhaltenen Filme dennoch nicht klebrig.

Die Bestimmung der Mindestfilmbildetemperatur erfolgt in der Weise, daß die Dispersion auf eine Platte aufgezogen wird, die an einem Ende erwärmt und am anderen gekühlt wird (DIN ISO 2115: 2001-04). Durch visuelle Beurteilung und Temperaturfühler in dichten Abständen längs der Platte läßt sich die mindeste Filmbildetemperatur ermitteln.

In einer weiteren bevorzugten Ausführungsform weist das aus der ersten Stufe erhaltene Copolymer eine Glasübergangstemperatur von nicht mehr als 0 °C, bevorzugt von 0 bis -40°C und besonders bevorzugt von -5 bis -25 °C auf und das aus der letzten (zweiten) Stufe erhaltene Produkt eine Glasübergangstemperatur von nicht mehr als 0 °C , be-vorzugt von 0 bis -40°C und besonders bevorzugt von -5 bis -25 °C auf. Derartige Polymerdispersionen können mit Vorteil als Klebstoffe zur Verkleben von Substraten eingesetzt werden. Die Mindestfilmbildetemperatur beträgt bei dieser Verwendung naturgemäß nur eine untergeordnete Rolle.

Die Polymerdispersionen können als Bindemittel für einkomponentige oder zweikomponentige Beschichtungsmassen von Kunststoff, Holz, Papier und Metall, z.B. für Lacke, Schutzüberzüge, Straßenmarkierungen, dekorative Überzüge, Anstrichfarben, Beschichtungen verwendet werden.

Für die unterschiedliche Verwendung können geeignete Hilfsmittel zugesetzt werden, z.B Verlaufsmittel, Verdicker, Entschäumer, Füllstoffe, Pigmente, und Dispergierhilfsmittel für Pigmente.

Die Beschichtungen können durch Auftragen der Beschichtungsmassen auf geeignete Substrate, wie Holz, Beton, Metall, Glas, Kunststoff, Keramiken, Putze, Stein, Asphalt, Textilien, gestrichene, grundierte oder verwitterte Untergründe erhalten werden.

Bei zweikomponentigen Beschichtungsmassen ist als weitere Komponente ein Vernetzer erforderlich, bei dem es sich beispielsweise um dem Fachmann für diese Zwecke bekannte Polyisocyanate handelt.

Das Aufbringen auf das Substrat kann in bekannter Weise, z. B. durch Spritzen, Spachteln, Rakeln, Bürsten, Rollen, Walzen oder Gießen erfolgen. Die Beschichtungsstärke liegt in der Regel in einem Bereich von 3 bis 1000 g/m² und vorzugsweise 10 bis 200 g/m². Anschließend werden die flüchtigen Bestandteile der Dispersionen entfernt. Dieser Vorgang kann gewünschtenfalls ein- oder mehrfach wiederholt werden.

Zur Entfernung des in der Dispersion enthaltenen Wassers wird nach dem Aufbringen auf das Substrat getrocknet, beispielsweise in einem Tunnelofen oder durch Ablüften. Die Trocknung kann auch durch NIR-Strahlung erfolgen, wobei als NIR-Strahlung hier elektromagnetische Strahlung im Wellenlängenbereich von 760 nm bis 2,5 µm, bevorzugt von 900 bis 1500 nm bezeichnet ist. Das Trocknen kann bei einer Temperatur von Umgebungstemperatur bis 100 °C über einen Zeitraum von wenigen Minuten bis mehreren Tagen erfolgen.

Insbesondere eignet sich die erfindungsgemäße Polymerdispersion in einer besonderen Ausführungsform als Bindemittel für Lacke und als Bindemittel für Anstrichfarben.

In der Anwendung als Korrosionsschutzlacke können neben der Polymerdispersion noch Korrosionsschutzmittel, wie Korrosionsinhibatoren oder aktive Korrisionsschutzpigmente, z.B. Zinkphosphat enthalten sein.

Mit den Polymerdispersionen werden zum Korrosionsschutz als Substrate die Oberflächen von Eisen, Stahl, Zn, Zn-Legierungen, Al oder Al-Legierungen behandelt. Die Oberfläche können unbeschichtet sein, mit Zink, Aluminium oder deren Legierungen überzogen sein, feuerverzinkt, galvanisch verzinkt, sherardisiert oder mit Primern vorbeschichtet sein.

Anstrichfarben, auch Dispersionsfarben genannt, sind eine der größten Produktgruppen der Lack- und Farbenindustrie (siehe Ullmanns Enzyklopädie der technischen Chemie, 4. Aufl., Band 15, Verlag Chemie, Weinheim 1978, S. 665). Dispersionsfarben enthalten in der Regel als Bindemittel ein filmbildendes Polymer und als farbgebenden Bestandteil wenigstens ein anorganisches Pigment, ferner anorganische Füllstoffe und Hilfsmittel, wie Entschäumer, Verdicker, Netzmittel und gegebenenfalls Filmbildehilfsmittel.

Eine weitere wichtige Eigenschaft der Polymerdispersionen ist die gute Blockfestigkeit der Anstriche, darunter versteht man eine geringe Verklebung des Anstrichfilms mit sich selbst unter Druckbelastung und erhöhter Temperatur (gute Blockfestigkeit).

Die erfindungsgemäßen Anstrichfarben (Dispersionsfarben) enthalten Pigmente und Füllstoffe vorzugsweise in solchen Mengen, daß die Pigment-Volumen-Konzentration (PVK) 15 % bis 85 % und besonders bevorzugt 25 % bis 55 % beträgt.

Typische Pigmente sind beispielsweise Titandioxid, vorzugsweise in der Rutilform, Bariumsulfat, Zinkoxid, Zinksulfid, basisches Bleicarbonat, Antimontrioxid, Lithopone (Zinksulfid + Bariumsulfat) verwendet. Die Dispersionsfarben können jedoch auch farbige Pigmente, beispielsweise Eisenoxide, Ruß, Graphit, lumineszente Pigmente, Zinkgelb, Zinkgrün, Ultramarin, Manganschwarz, Antimonschwarz, Manganviolett, Pariser Blau oder Schweinfurter Grün enthalten. Neben den anorganischen Pigmenten können die erfindungsgemäßen Dispersionsfarben auch organische Farbpigmente, z. B. Sepia, Gummigutt, Kasseler Braun, Toluidinrot, Pararot, Hansagelb, Indigo, Azofarbstoffe, anthrachinoide und indigoide Farbstoffe sowie Dioxazin, Chinacridon-, Phthalocyanin-, Isoindolinon- und Metallkomplexpigmente enthalten.

Geeignete Füllstoffe umfassen Alumosilicate, wie Feldspäte, Silicate, wie Kaolin, Talkum, Glimmer, Magnesit, Erdalkalicarbonate, wie Calciumcarbonat, beispielsweise in Form von Calcit oder Kreide, Magnesiumcarbonat, Dolomit, Erdalkalisulfate, wie Calciumsulfat, und Siliciumdioxid. Die Füllstoffe können als Einzelkomponenten eingesetzt werden. In der Praxis haben sich jedoch Füllstoffmischungen besonders bewährt, z. B. Calciumcarbonat/Kaolin, Calciumcarbonat/Talkum.

Zur Erhöhung der Deckkraft und zur Einsparung von Weißpigmenten werden häufig feinteilige Füllstoffe, z. B. feinteiliges Calciumcarbonat oder Mischungen verschiedener Calciumcarbonate mit unterschiedlichen Teilchengrößen eingesetzt. Zur Einstellung der Deckkraft des Farbtons und der Farbtiefe werden vorzugsweise Abmischungen aus Farbpigmenten und Füllstoffen eingesetzt.

Ferner sind aus den erfindungsgemäßen wässrigen Polymerisatdispersionen in einfacher Weise (beispielsweise Gefrier- oder Sprühtrocknung) die entsprechenden Polymerisatpulver zugänglich. Diese erfindungsgemäß zugänglichen Polymerisatpulver lassen sich ebenfalls als Komponenten bei der Herstellung von Klebstoffen, Dichtmassen, Kunststoffputzen, Papierstreichmassen, Faservliesen, Anstrichmitteln und Beschichtungsmitteln für organische Substrate sowie zur Modifizierung von mineralischen Bindemitteln einsetzen.

Die Erfindung soll anhand folgender nicht einschränkender Beispiele erläutert werden.

Der Feststoffgehalt wurde generell bestimmt, indem eine definierte Menge der wässrigen Polymerisatdispersion (ca. 1 g) in einem Aluminiumtiegel mit einem Innendurchmesser von ca. 5 cm bei 140 °C in einem Trockenschrank bis zur Gewichtskonstanz getrocknet wurde. Es wurden zwei separate Messungen durchgeführt. Die in den Beispielen angegebenen Werte stellen den Mittelwert der jeweiligen beiden Messergebnisse dar.

Die Viskosität der erhaltenen Dispersionen wurde dynamisch bei 23 °C und einem Geschwindigkeitsgefälle von 100 s⁻¹ gemäß DIN EN ISO 3219 bestimmt.

### Herstellung wässriger Polymerisatdispersionen

### Beispiel 1 (B1):

In einem mit Dosiereinrichtungen und Temperaturregelung ausgerüstetem Polymerisationsgefäß wurden bei 20 bis 25 °C (Raumtemperatur) unter Stickstoffatmosphäre

| | |
|---|---|
| 290,9 g | entionisiertes Wasser und |
| 12,0 g | einer 15 gew.-%igen wässrigen Lösung von Natriumlaurylsulfat |

vorgelegt und unter Rühren auf 80 °C aufgeheizt. Bei Erreichung dieser Temperatur wurde 25,7 g einer 7 gew.-%igen wässrigen Lösung von Natriumperoxodisulfat zugegeben und während zwei Minuten gerührt.

Anschließend wurde unter Aufrechterhaltung der Temperatur Zulauf 1 innerhalb von 40 Minuten bei gleichbleibendem Mengenstrom kontinuierlich zudosiert. Nach dem Ende von Zulauf 1 wurden dem Polymerisationsgemisch 12 g Wasser zugegeben. Danach ließ man das Polymerisationsgemisch noch 10 Minuten bei 80 °C nachreagieren. Daran anschließend wurden dem Polymerisationsgemisch 3,1 g einer 3 gew.-%igen wässrigen Ammoniaklösung zugegeben.

Daran anschließend wurde innerhalb von 90 Minuten bei gleichbleibendem Mengenstrom Zulauf 2 kontinuierlich zudosiert.

Nach Beendigung des Zulaufs 2 wurden dem Polymerisationsgemisch 12 g Wasser zugegeben. Danach ließ man das Polymerisationsgemisch noch 100 Minuten bei 80 °C nachreagieren.

Anschließend wurde die erhaltene wässrige Polymerisatdispersion auf Raumtemperatur abgekühlt, mit 62,9 g entionisiertem Wasser versetzt und über ein 125 µm Filter filtriert.

Zulauf 1 (homogene Mischung aus):

| | |
|---|---|
| 76,2 g | entionisiertes Wasser |
| 3,0 g | einer 15 gew.-%igen wässrigen Lösung von Natriumlaurylsulfat |
| 2,16 g | Ethylhexylthioglycolat |
| 13,5 g | Hydroxyethylmethacrylat |
| 13,5 g | Butylacrylat |
| 13,5 g | Styrol |
| 94,5 g | Methylmethacrylat |

Zulauf 2 (homogene Mischung aus):

| | |
|---|---|
| 124,4g | entionisiertes Wasser |
| 6,0 g | einer 15 gew.-%igen wässrigen Lösung von Natriumlaurylsulfat |
| 157,5 g | n-Butylacrylat |
| 157,5 g | Methylmethacrylat |

Die erhaltene wässrige Polymerisatdispersion wies einen Feststoffgehalt von 42,5 Gew.-% auf. Der gewichtsmittlere Teilchendurchmesser der Polymerisatdispersion betrug 78 nm.

Die erhaltene wässrige Polymerisatdispersion wies eine Hydroxyzahl von 6 mg KOH/g und eine Säurezahl von 0,3 mg KOH/g auf.

### Vergleichsbeispiel 1 (V1):

Die Herstellung des Vergleichsbeispiels 1 erfolgte analog der Herstellung von Beispiel 1 mit dem Unterschied, dass in Zulauf 1 13,5 g Methacrylsäure statt des Hydroxyethylmethacrylat eingesetzt wurde und dass statt 3,1 g einer 3 gew.-%igen wässrigen Ammoniaklösung 5,0 g einer 3 gew.-%igen wässrigen Ammoniaklösung zugegeben wurden.

Die erhaltene wässrige Polymerisatdispersion wies einen Feststoffgehalt von 42,6 Gew.-% auf. Der gewichtsmittlere Teilchendurchmesser der Polymerisatdispersion betrug 74 nm.

Bestimmt man die Wasseraufnahme (Eintauchen der Filme in Wasser über 24 h und Bestimmung der Gewichtsänderung) der freien Filme, die sich durch Ausgießen der Dispersionen in eine Kautschukform und Trocknen bei Raumtemperatur bis zur Gewichtskonstanz erhalten lassen, so zeigt sich, dass die Wasseraufnahme für Beispiel 1 deutlich unter der von Vergleichsbeispiel 1 liegt (für V1 größer 30% bezogen auf Gewicht des trocknen Films, für B1 kleiner als 10 % bezogen auf Gewicht des trocknen Films).

### Beispiel 2 (B2):

In einem mit Dosiereinrichtungen und Temperaturregelung ausgerüstetem Polymerisationsgefäß wurden bei 20 bis 25 °C (Raumtemperatur) unter Stickstoffatmosphäre

| | |
|---|---|
| 289,6 g | entionisiertes Wasser und |
| 12,0 g | einer 15 gew.-%igen wässrigen Lösung von Natriumlaurylsulfat |
| 1,1 g | einer 25 gew.-%igen wässrigen Ammoniaklösung |

vorgelegt und unter Rühren auf 80 °C aufgeheizt. Bei Erreichung dieser Temperatur wurde 25,7 g einer 7 gew.-%igen wässrigen Lösung von Natriumperoxodisulfat zugegeben und während zwei Minuten gerührt.

Anschließend wurde unter Aufrechterhaltung der Temperatur Zulauf 1 innerhalb von 40 Minuten bei gleichbleibendem Mengenstrom kontinuierlich zudosiert. Nach dem Ende von Zulauf 1 ließ man das Polymerisationsgemisch noch 10 Minuten bei 80 °C nachreagieren. Danach wurden dem Polymerisationsgemisch 13,5 g einer 2 gew.-%igen wässrigen Ammoniaklösung innerhalb von 10 Minuten bei gleichbleibendem Mengenstrom kontinuierlich zudosiert.

Daran anschließend wurde innerhalb von 90 Minuten bei gleichbleibendem Mengenstrom Zulauf 2 kontinuierlich zudosiert.

Nach Beendigung des Zulaufs 2 wurden dem Polymerisationsgemisch 12 g Wasser zugegeben. Danach ließ man das Polymerisationsgemisch noch 100 Minuten bei 80 °C nachreagieren.

Anschließend wurde die erhaltene wässrige Polymerisatdispersion auf Raumtemperatur abgekühlt, mit 57,8 g einer 18,7 gew.-%igen wässrigen Lösung von Adipinsäuredihydrazid versetzt und über ein 125 µm Filter filtriert.

Zulauf 1 (homogene Mischung aus):

| | |
|---|---|
| 33,0 g | entionisiertes Wasser |
| 3,0 g | einer 15 gew.-%igen wässrigen Lösung von Natriumlaurylsulfat |
| 2,16 g | Ethylhexylthioglycolat |
| 54,0 g | einer 20 gew.-%igen wässrigen Lösung von Diacetonacrylamid |
| 10,8 g | Butandiolmonoacrylat |
| 13,5 g | n-Butylacrylat |
| 13,5 g | Styrol |
| 86,4 g | Methylmethacrylat |

Zulauf 2 (homogene Mischung aus):

| | |
|---|---|
| 116,5 g | entionisiertes Wasser |
| 6,0 g | einer 15 gew.-%igen wässrigen Lösung von Natriumlaurylsulfat |
| 54,0 g | einer 20 gew.-%igen wässrigen Lösung von Diacetonacrylamid |
| 217,8 g | n-Butylacrylat |
| 86,4 g | Methylmethacrylat |

Die erhaltene wässrige Polymerisatdispersion wies einen Feststoffgehalt von 42,5 Gew.-% auf. Der gewichtsmittlere Teilchendurchmesser der Polymerisatdispersion betrug 91 nm. Die Viskosität wurde mit 39 mPas bestimmt.

### Vergleichsbeispiel 2 (V2):

In einem mit Dosiereinrichtungen und Temperaturregelung ausgerüstetem Polymerisationsgefäß wurden bei 20 bis 25 °C (Raumtemperatur) unter Stickstoffatmosphäre

| | |
|---|---|
| 289,6 g | entionisiertes Wasser und |
| 12,0 g | einer 15 gew.-%igen wässrigen Lösung von Natriumlaurylsulfat |
| 1,1 g | einer 25 gew.-%igen wässrigen Ammoniaklösung |

vorgelegt und unter Rühren auf 80 °C aufgeheizt. Bei Erreichung dieser Temperatur wurde 25,7 g einer 7 gew.-%igen wässrigen Lösung von Natriumperoxodisulfat zugegeben und während zwei Minuten gerührt.
Anschließend wurde unter Aufrechterhaltung der Temperatur Zulauf 1 innerhalb von 150 Minuten bei gleichbleibendem Mengenstrom kontinuierlich zudosiert. Danach wurden dem Polymerisationsgemisch 13,5 g einer 2 gew.-%igen wässrigen Ammoniaklösung innerhalb von 10 Minuten bei gleichbleibendem Mengenstrom kontinuierlich zudosiert.

Daran anschließend wurden dem Polymerisationsgemisch 12 g Wasser zugegeben. Danach ließ man das Polymerisationsgemisch noch 90 Minuten bei 80 °C nachreagieren.

Anschließend wurde die erhaltene wässrige Polymerisatdispersion auf Raumtemperatur abgekühlt, mit 57,8 g einer 18,7 gew.-%igen wässrigen Lösung von Adipinsäuredihydrazid versetzt und über ein 125 µm Filter filtriert.

Zulauf 1 (homogene Mischung aus):

| | |
|---|---|
| 149,5 g | entionisiertes Wasser |
| 9,0 g | einer 15 gew.-%igen wässrigen Lösung von Natriumlaurylsulfat |
| 2,16 g | Ethylhexylthioglycolat |
| 108,0 g | einer 20 gew.-%igen wässrigen Lösung von Diacetonacrylamid |
| 10,8 g | Butandiolmonoacrylat |
| 231,3 g | n-Butylacrylat |
| 13,5 g | Styrol |
| 172,8 g | Methylmethacrylat |

Die erhaltene wässrige Polymerisatdispersion wies einen Feststoffgehalt von 42,6 Gew.-% auf. Der gewichtsmittlere Teilchendurchmesser der Polymerisatdispersion betrug 77 nm. Die Viskosität wurde mit 75 mPas bestimmt.

Mit dieser Polymerisatdispersion wurden, im Gegensatz zu der nach Beispiel 2 hergestellten, lediglich trübe Filme erhalten.

### Beispiel 3 (B3):

In einem mit Dosiereinrichtungen und Temperaturregelung ausgerüstetem Polymerisationsgefäß wurden bei 20 bis 25 °C (Raumtemperatur) unter Stickstoffatmosphäre

| | |
|---|---|
| 290,9 g | entionisiertes Wasser und |
| 14,4 g | Adeka® Reasoap® SR-1025 (Asahi Denka Co) |

vorgelegt und unter Rühren auf 80 °C aufgeheizt. Bei Erreichung dieser Temperatur wurde 25,7 g einer 7 gew.-%igen wässrigen Lösung von Natriumperoxodisulfat zugegeben und während zwei Minuten gerührt.
Anschließend wurde unter Aufrechterhaltung der Temperatur Zulauf 1 innerhalb von 40 Minuten bei gleichbleibendem Mengenstrom kontinuierlich zudosiert. Nach dem Ende von Zulauf 1 wurden dem Polymerisationsgemisch 12,0 g entionisiertes Wasser zugegeben. Anschließend ließ man das Polymerisationsgemisch noch 10 Minuten bei 80 °C nachreagieren. Danach wurden dem Polymerisationsgemisch 1,9 g einer 3 gew.-%igen wässrigen Ammoniaklösung innerhalb von 10 Minuten bei gleichbleibendem Mengenstrom kontinuierlich zudosiert.

Daran anschließend wurde innerhalb von 90 Minuten bei gleichbleibendem Mengenstrom Zulauf 2 kontinuierlich zudosiert. 40 Minuten nach Start des Zulaufs 2 wurde parallel zum laufenden Zulauf 2 dem Polymerisationsgemisch 0,9 g einer 3 gew.-%igen wässrigen Ammoniaklösung innerhalb von 10 Minuten bei gleichbleibendem Mengenstrom kontinuierlich zudosiert.

Nach Beendigung des Zulaufs 2 wurden dem Polymerisationsgemisch 12 g Wasser zugegeben. Danach ließ man das Polymerisationsgemisch noch 90 Minuten bei 80 °C nachreagieren. Danach wurden dem Polymerisationsgemisch 1,7 g einer 5 gew.-%igen wässrigen Ammoniaklösung innerhalb von 10 Minuten bei gleichbleibendem Mengenstrom kontinuierlich zudosiert.

Anschließend wurde die erhaltene wässrige Polymerisatdispersion auf Raumtemperatur abgekühlt, mit 40,9 g einer 13,2 gew.-%igen wässrigen Lösung von Adipinsäuredihydrazid versetzt und über ein 125 µm Filter filtriert.

Zulauf 1 (homogene Mischung aus):

| | |
|---|---|
| 33,1 g | entionisiertes Wasser |
| 3,6 g | Adeka® Reasoap® SR-1025 (Asahi Denka Co) |
| 2,16 g | Ethylhexylthioglycolat |
| 54,0 g | einer 20 gew.-%igen wässrigen Lösung von Diacetonacrylamid |
| 10,8 g | Hydroxyethylmethacrylat |
| 13,5 g | Styrol |
| 99,9 g | Methylmethacrylat |

Zulauf 2 (homogene Mischung aus):

| | |
|---|---|
| 162,8 g | entionisiertes Wasser |
| 7,2 g | Adeka® Reasoap® SR-1025 (Asahi Denka Co) |
| 217,8 g | n-Butylacrylat |
| 97,2 g | Methylmethacrylat |

Die erhaltene wässrige Polymerisatdispersion wies einen Feststoffgehalt von 42,6 Gew.-% auf. Der gewichtsmittlere Teilchendurchmesser der Polymerisatdispersion betrug 97 nm. Die Viskosität wurde mit 42 mPas bestimmt.

### Beispiel 4 (B4):

In einem mit Dosiereinrichtungen und Temperaturregelung ausgerüstetem Polymerisationsgefäß wurden bei 20 bis 25 °C (Raumtemperatur) unter Stickstoffatmosphäre

| | |
|---|---|
| 493,5 g | entionisiertes Wasser und |
| 9,0 g | BASF Lipamin® OK |

vorgelegt und unter Rühren auf 70 °C aufgeheizt. Bei Erreichung dieser Temperatur wurde 154,3 g einer 7 gew.-%igen wässrigen Lösung von Azostarter V 50 (Fa. Wako Chemicals GmbH) zugegeben und während fünf Minuten gerührt.
Anschließend wurde unter Aufrechterhaltung der Temperatur Zulauf 1 innerhalb von 40 Minuten bei gleichbleibendem Mengenstrom kontinuierlich zudosiert. Nach dem Ende von Zulauf 1 wurden dem Polymerisationsgemisch 24,0 g entionisiertes Wasser zugegeben. Anschließend ließ man das Polymerisationsgemisch noch 20 Minuten bei 70 °C nachreagieren.

Daran anschließend wurde innerhalb von 90 Minuten bei gleichbleibendem Mengenstrom Zulauf 2 kontinuierlich zudosiert.

Nach Beendigung des Zulaufs 2 wurden dem Polymerisationsgemisch 24 g Wasser zugegeben. Danach ließ man das Polymerisationsgemisch noch 100 Minuten bei 70 °C nachreagieren.

Anschließend wurde die erhaltene wässrige Polymerisatdispersion auf Raumtemperatur abgekühlt, mit 115,5 g einer 18,7 gew.-%igen wässrigen Lösung von Adipinsäuredihydrazid versetzt und über ein 125 µm Filter filtriert.

Zulauf 1 (homogene Mischung aus):

| | |
|---|---|
| 66,0 g | entionisiertes Wasser |
| 2,25 g | BASF Lipamin® OK |

| | |
|---|---|
| 4,32 g | Ethylhexylthioglycolat |
| 108,0 g | einer 20 gew.-%igen wässrigen Lösung von Diacetonacrylamid |
| 21,6 g | Butandiolmonoacrylat |
| 27,0 g | Styrol |
| 172,8 g | Methylmethacrylat |

Zulauf 2 (homogene Mischung aus):

| | |
|---|---|
| 285,9 g | entionisiertes Wasser |
| 4,5 g | BASF Lipamin® OK |
| 108,0 g | einer 20 gew.-%igen wässrigen Lösung von Diacetonacrylamid |
| 435,6 g | n-Butylacrylat |
| 172,8 g | Methylmethacrylat |

Die erhaltene wässrige Polymerisatdispersion wies einen Feststoffgehalt von 41,6 Gew.-% auf. Der gewichtsmittlere Teilchendurchmesser der Polymerisatdispersion betrug 140 nm. Die Viskosität wurde mit 10 mPas bestimmt.

### Beispiel 5 (B5):

Die Herstellung des Beispiels 5 erfolgte analog der Herstellung von Beispiel 1 mit dem Unterschied, dass in Zulauf 1 statt 13,5 g n-Butylacrylat 85,5 g n-Butylacrylat und statt 86,4 g Methylmethacrylat 14,4 g Methylmethacrylat eingesetzt wurden, dass statt 57,8 g einer 18,7 gew.-%igen wässrigen Lösung von Adipinsäuredihydrazid 45,0 g einer 12 gew.-%igen wässrigen Lösung von Adipinsäuredihydrazid eingesetzt wurde und dass Zulauf 2 sich zusammensetzte aus einer homogenen Mischung aus:
159,7 g entionisiertes Wasser
6,0 g einer 15 gew.-%igen wässrigen Lösung von Natriumlaurylsulfat
315,0 g Ethylhexylacrylat.

Die erhaltene wässrige Polymerisatdispersion wies einen Feststoffgehalt von 40,2 Gew.-% auf. Der gewichtsmittlere Teilchendurchmesser der Polymerisatdispersion betrug 93 nm. Die Viskosität der erhaltenen Polymerisatdispersion lag bei 73 mPas. Durch z.B. Aufrakeln der Dispersion auf einer Glasplatte (mittels eines Kastenrakels, 200 µm Filmdicke nass) und Trocknung bei Raumtemperatur über 24 h konnte ein klebriger Film erhalten werden.

### Beispiel 6 (B6):

Die Herstellung des Beispiels 6 erfolgte analog der Herstellung von Beispiel 3 mit dem Unterschied, dass statt 14,4 g Adeka® Reasoap® SR-1025 12,0 g einer 15 gew.-%igen wässrigen Lösung von Natriumlaurylsulfat vorgelegt wurde, dass statt 40,9 g einer 13,2 gew.-%igen wässrigen Lösung von Adipinsäuredihydrazid 48,1 g einer 26,2 gew.-%igen wässrigen Lösung von Adipinsäuredihydrazid eingesetzt wurde, dass sich Zulauf 1 zusammensetzte aus einer homogenen Mischung aus:

| | |
|---|---|
| 77,0 g | entionisiertes Wasser |
| 6,9 g | einer 15 gew.-%igen wässrigen Lösung von Natriumlaurylsulfat |
| 126,0 g | einer 20 gew.-%igen wässrigen Lösung von Diacetonacrylamid |
| 9,0 g | Methacrylamid |
| 25,2 g | Hyroxyethylmethacrylat |
| 22,5 g | Styrol |
| 233,1 g | Methylmethacrylat |

Und Zulauf 2 sich zusammensetzte aus einer homogenen Mischung aus:

| | |
|---|---|
| 64,6 g | entionisiertes Wasser |
| 2,7 g | einer 15 gew.-%igen wässrigen Lösung von Natriumlaurylsulfat |
| 135,0 g | n-Butylacrylat |

Ausserdem wurde als weiterer Unterschied Zulauf 1 statt in 40 min in 90 min gleichmäßig zudosiert, Zulauf 2 statt in 90 min in 40 min gleichmäßig zudosiert. Die Zugaben von je 12,0g entionisiertem Wasser erfolgten im Anschluss an die Zulaufenden von Zulauf 1 und 2, die Zugabe der wässrigen Ammoniaklösung erfolgte im gleichen Abstand zum Reaktionsbeginn wie in Beispiel 3.

Die erhaltene wässrige Polymerisatdispersion wies einen Feststoffgehalt von 42,4 Gew.-% auf. Der gewichtsmittlere Teilchendurchmesser der Polymerisatdispersion betrug 99 nm. Die Viskosität der erhaltenen Polymerisatdispersion lag bei 39 mPas.

### Beispiel 7 (B7):

Die Herstellung des Beispiels 7 erfolgte analog der Herstellung von Beispiel 6 mit dem Unterschied, dass statt 12,0 g einer 15 gew.-%igen wässrigen Lösung von Natriumlaurylsulfat 6,0 g einer 15 gew.-%igen wässrigen Lösung von Natriumlaurylsulfat vorgelegt wurden, in Zulauf 2 statt 64,6 g 71,6 g entionisierte Wasser und statt 2,7 g 1,35 g einer 15 gew.-%igen wässrigen Lösung von Natriumlaurylsulfat eingesetzt wurde und sich Zulauf 1 zusammensetzte aus einer homogenen Mischung aus:

| | |
|---|---|
| 77,0 g | entionisiertes Wasser |
| 3,45 g | einer 15 gew.-%igen wässrigen Lösung von Natriumlaurylsulfat |
| 126,0 g | einer 20 gew.-%igen wässrigen Lösung von Diacetonacrylamid |
| 45,0 g | Hydroxyethylmethacrylat |
| 11,7 g | Styrol |
| 233,1 g | Methylmethacrylat. |

Die erhaltene wässrige Polymerisatdispersion wies einen Feststoffgehalt von 42,7 Gew.% auf. Der gewichtsmittlere Teilchendurchmesser der Polymerisatdispersion betrug 102 nm. Die Viskosität der erhaltenen Polymerisatdispersion lag bei 23 mPas.

### Beispiel 8 (B8):

Die Herstellung des Beispiels 8 erfolgte analog der Herstellung von Beispiel 3 mit dem Unterschied, dass sich Zulauf 1 zusammensetzte aus einer homogenen Mischung aus:

| | |
|---|---|
| 33,0 g | entionisiertes Wasser |
| 3,0 g | einer 15 gew.-%igen wässrigen Lösung von Natriumlaurylsulfat |
| 2,16 g | Ethylhexylthioglycolat |
| 54,0 g | einer 20 gew.-%igen wässrigen Lösung von Diacetonacrylamid |
| 21,6 g | Hydroxyethylmethacrylat |
| 18,0 g | Glycidylmethacrylat |
| 13,5 g | Styrol |
| 71,1 g | Methylmethacrylat |

Eine Probennahme erbrachte, daß das Produkt der ersten Stufe ein gewichtsmittleres Molekulargewicht Mw von 13.900 g/mol und einen gewichtsmittleren Teilchendurchmesser von 60 nm aufwies.

Und Zulauf 2 sich zusammensetzte aus einer homogenen Mischung aus:

| | |
|---|---|
| 159,7g | entionisiertes Wasser |
| 6,0 g | einer 15 gew.-%igen wässrigen Lösung von Natriumlaurylsulfat |
| 315,0 g | n-Butylacrylat |

Die erhaltene wässrige Polymerisatdispersion wies einen Feststoffgehalt von 43,1 Gew.-% auf. Der gewichtsmittlere Teilchendurchmesser der Polymerisatdispersion betrug 143 nm. Die Viskosität der erhaltenen Polymerisatdispersion lag bei 21 mPas. Die erhaltene Polymerisatdispersion wies ein gewichtsmittleres Molekulargewicht bezogen auf den Solanteil von ca 204000 g/mol auf.

### Beispiel 9 (B9):

Die Herstellung des Beispiels 9 erfolgte analog der Herstellung von Beispiel 8 mit dem Unterschied, dass in Zulauf 1 statt 21,6 g Hydroxyethylmethacrylat 21,6 g Hydroxyethylacrylat eingesetzt wurde.

Die erhaltene wässrige Polymerisatdispersion wies einen Feststoffgehalt von 42,9 Gew.-% auf. Der gewichtsmittlere Teilchendurchmesser der Polymerisatdispersion betrug 153 nm. Die Viskosität der erhaltenen Polymerisatdispersion lag bei 22 mPas.

### Beispiel 10 (B 10):

Die Herstellung des Beispiels 10 erfolgte analog der Herstellung von Beispiel 8 mit dem Unterschied, dass Zulauf 1 zusammensetzte aus einer homogenen Mischung aus:

| | |
|---|---|
| 5,5 g | entionisiertes Wasser |
| 0,51 g | einer 15 gew.-%igen wässrigen Lösung von Natriumlaurylsulfat |
| 0,36 g | Ethylhexylthioglycolat |
| 9,0 g | einer 20 gew.-%igen wässrigen Lösung von Diacetonacrylamid |
| 1,8 g | Hydroxyethylmethacrylat |
| 1,5 g | Glycidylmethacrylat |
| 2,25 g | Styrol |
| 15,2 g | Methylmethacrylat |

Und Zulauf 2 sich zusammensetzte aus einer homogenen Mischung aus:

| | |
|---|---|
| 214,8 g | entionisiertes Wasser |
| 8,1 g | einer 15 gew.-%igen wässrigen Lösung von Natriumlaurylsulfat |
| 427,5 g | n-Butylacrylat |

Ausserdem wurde als weiterer Unterschied Zulauf 1 statt in 40 min in 5 min gleichmäßig zudosiert, Zulauf 2 statt in 90 min in 125 min gleichmäßig zudosiert. Die Zugaben der je 12,0g entionisiertes Wasser erfolgten im Anschluss an die Zulaufenden von Zulauf 1 und 2, die Zugaben der wässrigen Ammoniaklösung erfolgten im gleichen Abstand zum Reaktionsbeginn wie in Beispiel 3, ausserdem wurde statt 40,9 g einer 13,2 gew.-%igen wässrigen Lösung von Adipinsäuredihydrazid 36,4 g einer 2,5 gew.-%igen wässrigen Lösung von Adipinsäuredihydrazid eingesetzt.

Die erhaltene wässrige Polymerisatdispersion wies einen Feststoffgehalt von 43,0 Gew.-% auf. Der gewichtsmittlere Teilchendurchmesser der Polymerisatdispersion betrug 128 nm. Die Viskosität der erhaltenen Polymerisatdispersion lag bei 23 mPas.

## Patentansprüche

1. Beschichtungsmasse, enthaltend mindestens eine Polymerdispersion, erhältlich durch mindestens zweistufige Emulsionspolymerisation von
in einer ersten Stufe Umsetzung
(A1) mindestens eines (Meth)acrylsäurealkylesters,
(B1) optional mindestens eines Vinylaromaten mit bis zu 20 C-Atomen,
(C1) mindestens eines Hydroxyalkyl(meth)acrylats mit einer ein bis zehn Kohlenstoffatome umfassenden Alkylengruppe,
(D1) optional mindestens einer radikalisch polymerisierbaren Verbindung ausgewählt aus der Gruppe bestehend aus ethylenisch ungesättigten Nitrilen mit bis zu 20 C-Atomen, Vinylestern von bis zu 20 C-Atome enthaltenden Carbonsäuren, Vinyl halogeniden mit bis zu 10 C-Atomen und Vinylethern von 1 bis 10 C-Atome enthaltenden Alkoholen,
(E1) optional mindestens einer α,β-ethylenisch ungesättigten Carbonsäure,
(F1) optional mindestens einem Vernetzer,
(G1) optional mindestens einer Verbindung ausgewählt aus der Gruppe bestehend aus (Meth)acrylsäure 2-(2-oxo-imidazolidin-1-yl)-ethyl ester (Ureidoethyl (meth)acrylat), Acetoacetoxyethyl acrylat, Acetoacetoxypropyl methacrylat, Acetoacetoxybutyl methacrylat, 2-(Acetoacetoxy) ethyl methacrylat, Diacetonacrylamid (DAAM) und Diacetonmethacrylamid,
(H1) optional mindestens einer Verbindung mit einer (Meth)acrylat- und einer Epoxygruppe und
(I1) optional mindestens einem α,β-ethylenisch ungesättigten Carbonsäureamid,
in Gegenwart mindestens eines Initiators und in Gegenwart mindestens eines Emulgators sowie optional in Gegenwart mindestens eines Reglers,
mit der Maßgabe, daß das aus der ersten Stufe erhaltene Copolymer
- eine Säurezahl gemäß DIN EN ISO 3682 (potentiometrisch) von nicht mehr als 10 mg KOH/g Polymer,
- eine Hydroxyzahl gemäß DIN 53240-2 (potentiometrisch bei einer Acetylierungszeit von 20 Minuten) von 2 bis 100 mg KOH/g Polymer,
- eine Teilchengröße von 20 bis 80 nm und
- ein gewichtsmittleres Molekulargewicht, bestimmt über eine Größenausschlußchromatographie mit Tetrahydrofuran enthaltend 0,1 Gew% Trifluoressigsäure als Eluent bei einer Durchflußgeschwindigkeit von 1 ml/min und 35 °C Säulentemperatur, von 5.000 bis 50.000 g/mol
aufweist,
und die Summe der Monomere (C1) und (I1) von 0,5 bis 20 Gew% beträgt,
gefolgt von einer radikalischen Polymerisation in einer Folgestufe in Gegenwart des in der ersten Stufe hergestellten Copolymers von
(A2) mindestens einem (Meth)acrylsäurealkylester,
(B2) optional mindestens einem Vinylaromaten mit bis zu 20 C-Atomen,
(C2) optional mindestens einem Hydroxyalkyl(meth)acrylat mit einer ein bis zehn Kohlenstoffatome umfassenden Alkylengruppe,
(D2) optional mindestens einer radikalisch polymerisierbaren Verbindung ausgewählt aus der Gruppe bestehend aus ethylenisch ungesättigten Nitrilen mit bis zu 20 C-Atomen, Vinylestern von bis zu 20 C-Atome enthaltenden Carbonsäuren, Vinylhalogeniden mit bis zu 10 C-Atomen und Vinylethern von 1 bis 10 C-Atome enthaltenden Alkoholen,
(E2) optional mindestens einer α,β-ethylenisch ungesättigten Carbonsäure,
(F2) optional mindestens einem Vernetzer und
(G2) optional mindestens einer Verbindung ausgewählt aus der Gruppe bestehend aus (Meth)acrylsäure 2-(2-oxo-imidazolidin-1-yl)-ethyl ester (Ureidoethyl (meth)acrylat), Acetoacetoxyethyl acrylat, Acetoacetoxypropyl methacrylat, Acetoacetoxybutyl methacrylat, 2-(Acetoacetoxy) ethyl methacrylat, Diacetonacrylamid (DAAM) und Diacetonmethacrylamid,
(H2) optional mindestens einer Verbindung mit einer (Meth)acrylat- und einer Epoxygruppe und
(12) optional mindestens einem α,β-ethylenisch ungesättigten Carbonsäureamid,
optional gefolgt von einer oder mehreren weiteren Stufen einer radikalischen Polymerisation mindestens eines Monomeren,
wobei die Menge des mindestens einen Emulgators 0,1 bis 3,5 Gew% beträgt, bezogen auf die Gesamtmenge der in allen Stufen in die radikalische Polymerisation eindosierten radikalisch polymerisierbaren Monomere,
mit der Maßgabe, daß
- das Gewichtsverhältnis der Summe der Monomere der ersten Stufe (A1) bis (I1) zur Summe der Monomere der Folgestufen (A2) bis (12) von 5:95 bis 70:30 beträgt,
- das aus der letzten Stufe erhaltene Produkt eine Teilchengröße von 50 bis 300 nm aufweist,
- die Säurezahl des Produktes der letzten Stufe nicht höher ist als die Säurezahl des Produktes der ersten Stufe und
- die Hydroxyzahl des Produktes der letzten Stufe nicht höher ist als die Hydroxyzahl des Produktes der ersten Stufe.

2. Beschichtungsmasse gemäß Anspruch 1, **dadurch gekennzeichnet, daß** das Monomer (A2) ausgewählt aus der Gruppe bestehend aus Methylmethacrylat, Methylacrylat, Ethylacrylat, n-Butylacrylat, 2-Ethylhexylacrylat und 3-Propylheptylacrylat.

3. Beschichtungsmasse gemäß einem der vorstehenden Ansprüche, **dadurch gekennzeichnet, daß** das Monomer (B2) ausgewählt aus der Gruppe bestehend aus Styrol und α-Methylstyrol.

4. Beschichtungsmasse gemäß einem der vorstehenden Ansprüche, **dadurch gekennzeichnet, daß** das Monomer (C1) ausgewählt aus der Gruppe bestehend aus (Meth)acrylsäure-2-hydroxyethylester, (Meth)acrylsäure-2-hydroxypropylester und (Meth)acrylsäure-3-hydroxypropylester.

5. Beschichtungsmasse gemäß einem der vorstehenden Ansprüche, **dadurch gekennzeichnet, daß** ein Monomer (G1) anwesend ist und es sich dabei um Diacetonacrylamid handelt.

6. Beschichtungsmasse gemäß einem der vorstehenden Ansprüche, **dadurch gekennzeichnet, daß** es sich bei dem Emulgator um einen ionischen Emulgator handelt.

7. Beschichtungsmasse gemäß einem der vorstehenden Ansprüche, **dadurch gekennzeichnet, daß** sie eine Mindestfilmbildetemperatur von nicht mehr als 5 °C aufweist.

8. Beschichtungsmasse gemäß einem der vorstehenden Ansprüche, **dadurch gekennzeichnet, daß** das aus der ersten Stufe erhaltene Copolymer eine Glasübergangstemperatur von 40 bis 150 °C und das aus der zweiten Stufe erhaltene Produkt eine um mindestens 40 °C niedrigere Glasübergangstemperatur aufweist.

9. Beschichtungsmasse gemäß einem der Ansprüche 1 bis 7, **dadurch gekennzeichnet, daß** das aus der ersten Stufe erhaltene Copolymer eine Glasübergangstemperatur von nicht mehr als 0 °C und das aus der zweiten Stufe erhaltene Produkt eine Glasübergangstemperatur von nicht mehr als 0 °C aufweist.

10. Verfahren zur Herstellung von Polymerdispersionen gemäß Anspruch 1, **dadurch gekennzeichnet, daß** man
eine mindestens zweistufige Emulsionspolymerisation durchführt,
bei der man in einer ersten Stufe die Umsetzung
(A1) mindestens eines (Meth)acrylsäurealkylesters,
(B1) optional mindestens eines Vinylaromaten mit bis zu 20 C-Atomen,
(C1) mindestens eines Hydroxyalkyl(meth)acrylats mit einer ein bis zehn Kohlenstoffatome umfassenden Alkylengruppe,
(D1) optional mindestens einer radikalisch polymerisierbaren Verbindung ausgewählt aus der Gruppe bestehend aus ethylenisch ungesättigten Nitrilen mit bis zu 20 C-Atomen, Vinylestern von bis zu 20 C-Atome enthaltenden Carbonsäuren, Vinylhalogeniden mit bis zu 10 C-Atomen und Vinylethern von 1 bis 10 C-Atome enthaltenden Alkoholen,
(E1) optional mindestens einer α,β-ethylenisch ungesättigten Carbonsäure,
(F1) optional mindestens einem Vernetzer,
(G1) optional mindestens einer Verbindung ausgewählt aus der Gruppe bestehend aus (Meth)acrylsäure 2-(2-oxo-imidazolidin-1-yl)-ethyl ester (Ureidoethyl (meth)acrylat), Acetoacetoxyethyl acrylat, Acetoacetoxypropyl methacrylat, Acetoacetoxybutyl methacrylat, 2-(Acetoacetoxy) ethyl methacrylat, Diacetonacrylamid (DAAM) und Diacetonmethacrylamid,
(H1) optional mindestens einer Verbindung mit einer (Meth)acrylat- und einer Epoxygruppe und
(I1) optional mindestens einem α,β-ethylenisch ungesättigten Carbonsäureamid,
in Gegenwart mindestens eines Initiators und in Gegenwart mindestens eines Emulgators sowie optional in Gegenwart mindestens eines Reglers durchführt,
mit der Maßgabe, daß das aus der ersten Stufe erhaltene Copolymer
- eine Säurezahl gemäß DIN EN ISO 3682 (potentiometrisch) von nicht mehr als 10 mg KOH/g Polymer,
- eine Hydroxyzahl gemäß DIN 53240-2 (potentiometrisch bei einer Acetylierungszeit von 20 Minuten) von 2 bis 100 mg KOH/g Polymer,
- eine Teilchengröße von 20 bis 80 nm und
- ein gewichtsmittleres Molekulargewicht, bestimmt über eine Größenausschlußchromatographie mit Tetrahydrofuran + 0,1 Gew% Trifluoressigsäure als Eluent bei einer Durchflußgeschwindigkeit von 1 ml/min und 35 °C Säulentemperatur, von 5.000 bis 50.000 g/mol
aufweist,
und die Summe der Monomere (C1) und (I1) von 0,5 bis 20 Gew% beträgt,
gefolgt von einer radikalischen Polymerisation in einer Folgestufe in Gegenwart des in der ersten Stufe hergestellten Copolymers von
(A2) mindestens einem (Meth)acrylsäurealkylester,
(B2) optional mindestens einem Vinylaromaten mit bis zu 20 C-Atomen,
(C2) optional mindestens einem Hydroxyalkyl(meth)acrylat mit einer ein bis zehn Kohlenstoffatome umfassenden Alkylengruppe,
(D2) optional mindestens einer radikalisch polymerisierbaren Verbindung ausgewählt aus der Gruppe bestehend aus ethylenisch ungesättigten Nitrilen mit bis zu 20 C-Atomen, Vinylestern von bis zu 20 C-Atome enthaltenden Carbonsäuren, Vinylhalogeniden mit bis zu 10 C-Atomen und Vinylethern von 1 bis 10 C-Atome enthaltenden Alkoholen,
(E2) optional mindestens einer α,β-ethylenisch ungesättigten Carbonsäure,
(F2) optional mindestens einem Vernetzer und
(G2) optional mindestens einer Verbindung ausgewählt aus der Gruppe bestehend aus (Meth)acrylsäure 2-(2-oxo-imidazolidin-1-yl)-ethyl ester (Ureidoethyl (meth)acrylat), Acetoacetoxyethyl acrylat, Acetoacetoxypropyl methacrylat, Acetoacetoxybutyl methacrylat, 2-(Acetoacetoxy) ethyl methacrylat, Diacetonacrylamid (DAAM) und Diacetonmethacrylamid,
(H2) optional mindestens einer Verbindung mit einer (Meth)acrylat- und einer Epoxygruppe und
(12) optional mindestens einem α,β-ethylenisch ungesättigten Carbonsäureamid,
optional gefolgt von einer oder mehreren weiteren Stufen einer radikalischen Polymerisation mindestens eines Monomeren,
wobei die Menge des mindestens einen Emulgators 0,1 bis 3,5 Gew% beträgt, bezogen auf die Gesamtmenge der in allen Stufen in die radikalische Polymerisation eindosierten radikalisch polymerisierbaren Monomere,
mit der Maßgabe, daß
- das Gewichtsverhältnis der Summe der Monomere der ersten Stufe (A1) bis (I1) zur Summe der Monomere der Folgestufen (A2) bis (12) von 5:95 bis 70:30 beträgt,
- das aus der letzten Stufe erhaltene Produkt eine Teilchengröße von 50 bis 300 nm aufweist,
- die Säurezahl des Produktes der letzten Stufe nicht höher ist als die Säurezahl des Produktes der ersten Stufe und
- die Hydroxyzahl des Produktes der letzten Stufe nicht höher ist als die Hydroxyzahl des Produktes der ersten Stufe.

11. Verwendung von Beschichtungsmassen gemäß Anspruch 8 für ein- oder zweikomponentige Beschichtungen von Kunststoff, Holz, Papier und Metall.

12. Verwendung von Beschichtungsmassen gemäß Anspruch 9 als Klebstoff.

## Claims

1. A coating composition comprising at least one polymer dispersion obtainable by at least two-stage emulsion polymerization of
in a first stage, reaction of
(A1) at least one alkyl (meth)acrylate,
(B1) optionally at least one vinylaromatic having up to 20 C atoms,
(C1) at least one hydroxyalkyl (meth)acrylate having an alkylene group comprising one to ten carbon atoms,
(D1) optionally at least one free-radically polymerizable compound selected from the group consisting of ethylenically unsaturated nitriles having up to 20 C atoms, vinyl esters of carboxylic acids containing up to 20 C atoms, vinyl halides having up to 10 C atoms, and vinyl ethers of alcohols containing 1 to 10 C atoms,
(E1) optionally at least one α,β-ethylenically unsaturated carboxylic acid,
(F1) optionally at least one crosslinker,
(G1) optionally at least one compound selected from the group consisting of 2-(2-oxoimidazolidin-1-yl)ethyl meth(acrylate) (ureidoethyl (meth)acrylate), acetoacetoxyethyl acrylate, acetoacetoxypropyl methacrylate, acetoacetoxybutyl methacrylate, 2-(acetoacetoxy)ethyl methacrylate, diacetoneacrylamide (DAAM), and diacetonemethacrylamide,
(H1) optionally at least one compound having a (meth)acrylate group and an epoxy group, and
(I1) optionally at least one α,β-ethylenically unsaturated carboxamide,
in the presence of at least one initiator and in the presence of at least one emulsifier and also, optionally, in the presence of at least one regulator,
with the proviso that the copolymer obtained from the first stage has
- an acid number in accordance with DIN EN ISO 3682 (potentiometrically) of not more than 10 mg KOH/g polymer,
- a hydroxyl number in accordance with DIN 53240-2 (potentiometrically, with an acetylation time of 20 minutes) of 2 to 100 mg KOH/g polymer,
- a particle size of 20 to 80 nm, and
- a weight-average molecular weight, determined via a size exclusion chromatography procedure with tetrahydrofuran containing 0.1 % by weight of trifluoroacetic acid as eluent, with a flow rate of 1 ml/min and a column temperature of 35°C, of 5000 to 50 000 g/mol,
and the sum of the monomers (C1) and (I1) is from 0.5% to 20% by weight, followed by a free-radical polymerization, in a subsequent stage, in the presence of the copolymer prepared in the first stage, of
(A2) at least one alkyl (meth)acrylate,
(B2) optionally at least one vinylaromatic having up to 20 C atoms,
(C2) optionally at least one hydroxyalkyl (meth)acrylate having an alkylene group comprising one to ten carbon atoms,
(D2) optionally at least one free-radically polymerizable compound selected from the group consisting of ethylenically unsaturated nitriles having up to 20 C atoms, vinyl esters of carboxylic acids containing up to 20 C atoms, vinyl halides having up to 10 C atoms, and vinyl ethers of alcohols containing 1 to 10 C atoms,
(E2) optionally at least one α,β-ethylenically unsaturated carboxylic acid,
(F2) optionally at least one crosslinker, and
(G2) optionally at least one compound selected from the group consisting of 2-(2-oxoimidazolidin-1-yl)ethyl meth(acrylate) (ureidoethyl (meth)acrylate), acetoacetoxyethyl acrylate, acetoacetoxypropyl methacrylate, acetoacetoxybutyl methacrylate, 2-(acetoacetoxy)ethyl methacrylate, diacetoneacrylamide (DAAM), and diacetonemethacrylamide,
(H2) optionally at least one compound having a (meth)acrylate group and an epoxy group, and
(12) optionally at least one α,β-ethylenically unsaturated carboxamide,
optionally followed by one or more further stages of a free-radical polymerization of at least one monomer,
the amount of the at least one emulsifier being 0.1 % to 3.5% by weight, based on the total amount of the free-radically polymerizable monomers metered into the free-radical polymerization in all the stages,
with the proviso that
- the weight ratio of the sum of the monomers of the first stage (A1) to (I1) to the sum of the monomers of the subsequent stages (A2) to (12) is from 5:95 to 70:30,
- the product obtained from the last stage has a particle size of 50 to 300 nm,
- the acid number of the product of the last stage is not higher than the acid number of the product of the first stage, and
- the hydroxyl number of the product of the last stage is not higher than the hydroxyl number of the product of the first stage.

2. The coating composition according to claim 1, wherein the monomer (A2) is selected from the group consisting of methyl methacrylate, methyl acrylate, ethyl acrylate, n-butyl acrylate, 2-ethylhexyl acrylate, and 3-propylheptyl acrylate.

3. The coating composition according to either of the preceding claims, wherein the monomer (B2) is selected from the group consisting of styrene and α-methylstyrene.

4. The coating composition according to any of the preceding claims, wherein the monomer (C1) is selected from the group consisting of 2-hydroxyethyl (meth)acrylate, 2-hydroxypropyl (meth)acrylate, and 3-hydroxypropyl (meth)acrylate.

5. The coating composition according to any of the preceding claims, wherein a monomer (G1) is present and it is diacetoneacrylamide.

6. The coating composition according to any of the preceding claims, wherein the emulsifier is an ionic emulsifier.

7. The coating composition according to any of the preceding claims, having a minimum film-forming temperature of not more than 5°C.

8. The coating composition according to any of the preceding claims, wherein the copolymer obtained from the first stage has a glass transition temperature of 40 to 150°C, and the product obtained from the second stage has a glass transition temperature which is lower by at least 40°C.

9. The coating composition according to any of claims 1 to 7, wherein the copolymer obtained from the first stage has a glass transition temperature of not more than 0°C, and the product obtained from the second stage has a glass transition temperature of not more than 0°C.

10. A process for preparing a polymer dispersion according to claim 1, which comprises carrying out
an at least two-stage emulsion polymerization,
in which, in a first stage, the reaction of
(A1) at least one alkyl (meth)acrylate,
(B1) optionally at least one vinylaromatic having up to 20 C atoms,
(C1) at least one hydroxyalkyl (meth)acrylate having an alkylene group comprising one to ten carbon atoms,
(D1) optionally at least one free-radically polymerizable compound selected from the group consisting of ethylenically unsaturated nitriles having up to 20 C atoms, vinyl esters of carboxylic acids containing up to 20 C atoms, vinyl halides having up to 10 C atoms, and vinyl ethers of alcohols containing 1 to 10 C atoms,
(E1) optionally at least one α,β-ethylenically unsaturated carboxylic acid,
(F1) optionally at least one crosslinker,
(G1) optionally at least one compound selected from the group consisting of 2-(2-oxoimidazolidin-1-yl)ethyl meth(acrylate) (ureidoethyl (meth)acrylate), acetoacetoxyethyl acrylate, acetoacetoxypropyl methacrylate, acetoacetoxybutyl methacrylate, 2-(acetoacetoxy)ethyl methacrylate, diacetoneacrylamide (DAAM), and diacetonemethacrylamide,
(H1) optionally at least one compound having a (meth)acrylate group and an epoxy group, and
(I1) optionally at least one α,β-ethylenically unsaturated carboxamide,
in the presence of at least one initiator and in the presence of at least one emulsifier and also, optionally, in the presence of at least one regulator,
with the proviso that the copolymer obtained from the first stage has
- an acid number in accordance with DIN EN ISO 3682 (potentiometrically) of not more than 10 mg KOH/g polymer,
- a hydroxyl number in accordance with DIN 53240-2 (potentiometricallty, with an acetylation time of 20 minutes) of 2 to 100 mg KOH/g polymer,
- a particle size of 20 to 80 nm, and
- a weight-average molecular weight, determined via a size exclusion chromatography procedure with tetrahydrofuran + 0.1 % by weight of trifluoroacetic acid as eluent, with a flow rate of 1 ml/min and a column temperature of 35°C, of 5000 to 50 000 g/mol,
and the sum of the monomers (C1) and (I1) is from 0.5% to 20% by weight, followed by a free-radical polymerization, in a subsequent stage, in the presence of the copolymer prepared in the first stage, of
(A2) at least one alkyl (meth)acrylate,
(B2) optionally at least one vinylaromatic having up to 20 C atoms,
(C2) optionally at least one hydroxyalkyl (meth)acrylate having an alkylene group comprising one to ten carbon atoms,
(D2) optionally at least one free-radically polymerizable compound selected from the group consisting of ethylenically unsaturated nitriles having up to 20 C atoms, vinyl esters of carboxylic acids comprising up to 20 C atoms, vinyl halides having up to 10 C atoms, and vinyl ethers of alcohols comprising 1 to 10 C atoms,
(E2) optionally at least one α,β-ethylenically unsaturated carboxylic acid,
(F2) optionally at least one crosslinker; and
(G2) optionally at least one compound selected from the group consisting of 2-(2-oxoimidazolidin-1-yl)ethyl meth(acrylate) (ureidoethyl (meth)acrylate), acetoacetoxyethyl acrylate, acetoacetoxypropyl methacrylate, acetoacetoxybutyl methacrylate, 2-(acetoacetoxy)ethyl methacrylate, diacetoneacrylamide (DAAM), and diacetonemethacrylamide,
(H2) optionally at least one compound having a (meth)acrylate group and an epoxy group, and
(12) optionally at least one α,β-ethylenically unsaturated carboxamide,
optionally followed by one or more further stages of a free-radical polymerization of at least one monomer,
the amount of the at least one emulsifier being 0.1 % to 3.5% by weight, based on the total amount of the free-radically polymerizable monomers metered into the free-radical polymerization in all the stages,
with the proviso that
- the weight ratio of the sum of the monomers of the first stage (A1) to (I1) to the sum of the monomers of the subsequent stages (A2) to (I2) is from 5:95 to 70:30,
- the product obtained from the last stage has a particle size of 50 to 300 nm,
- the acid number of the product of the last stage is not higher than the acid number of the product of the first stage, and
- the hydroxyl number of the product of the last stage is not higher than the hydroxyl number of the product of the first stage.

11. The use of a coating composition according to claim 8 for a one- or two-component coating on plastic, wood, paper or metal.

12. The use of a coating composition according to claim 9 as an adhesive.

## Revendications

1. Masse de revêtement, contenant au moins une dispersion polymère, pouvant être obtenue par polymérisation en émulsion au moins en deux étapes de
- dans une première étape, transformation de
(A1) au moins un ester alkylique de l'acide (méth)acrylique,
(B1) éventuellement au moins un aromatique de
vinyle comprenant jusqu'à 20 atomes de carbone,
(C1) au moins un (méth)acrylate d'hydroxyalkyle comprenant un groupe alkylène comprenant un à dix atomes de carbone,
(D1) éventuellement au moins un composé polymérisable par voie radicalaire choisi dans le groupe constitué par les nitriles éthyléniquement insaturés comprenant jusqu'à 20 atomes de carbone, les esters de vinyle d'acides carboxyliques comprenant jusqu'à 20 atomes de carbone, les halogénures de vinyle comprenant jusqu'à 10 atomes de carbone et les vinyléthers d'alcools contenant 1 à 10 atomes de carbone,
(E1) éventuellement au moins un acide carboxylique éthyléniquement α,β-insaturé,
(F1) éventuellement au moins un agent de réticulation,
(G1) éventuellement au moins un composé choisi dans le groupe constitué par l'ester 2-(2-oxoimidazolidin-1-yl)-éthylique de l'acide (méth)acrylique ((méth)acrylate d'uréidoéthyle), l'acrylate d'acétoacétoxyéthyle, le méthacrylate d'acétoacétoxypropyle, le méthacrylate d'acétoacétoxybutyle, le méthacrylate de 2-(acétoacétoxy)éthyle, le diacétonacrylamide (DAAM) et le diacétoneméthacrylamide,
(H1) éventuellement au moins un composé présentant un groupe (méth)acrylate et un groupe époxy et
(I1) éventuellement au moins un amide d'acide carboxylique éthyléniquement α,β-insaturé,
en présence d'au moins un initiateur et en présence d'au moins un émulsifiant ainsi qu'éventuellement en présence d'au moins un agent de régulation,
à condition que le copolymère obtenu de la première étape
- présente un indice d'acide selon la norme DIN EN ISO 3682 (par potentiométrie) qui n'est pas supérieur à 10 mg KOH/g de polymère,
- présente un indice d'hydroxy selon la norme DIN 53240-2 (par potentiométrie à un temps d'acétylation de 20 minutes) de 2 à 100 mg KOH/g de polymère,
- présente une grosseur de particules de 20 à 80 nm et
- présente un poids moléculaire pondéral moyen, déterminé via une chromatographie par exclusion de tailles avec du tétrahydrofuranne contenant 0,1% en poids d'acide trifluoroacétique comme éluant à une vitesse d'écoulement de 1 ml/min et une température de colonne de 35°C, de 5000 à 50 000 g/mole
et la somme des monomères (C1) et (I1) vaut 0,5 à 20% en poids,
suivie d'une polymérisation par voie radicalaire dans une étape consécutive en présence du copolymère préparé dans la première étape de
(A2) au moins un ester alkylique de l'acide (méth)acrylique,
(B2) éventuellement au moins un aromatique de vinyle comprenant jusqu'à 20 atomes de carbone,
(C2) éventuellement au moins un (méth)acrylate d'hydroxyalkyle comprenant un groupe alkylène comprenant un à dix atomes de carbone,
(D2) éventuellement au moins un composé polymérisable par voie radicalaire choisi dans le groupe constitué par les nitriles éthyléniquement insaturés comprenant jusqu'à 20 atomes de carbone, les esters de vinyle d'acides carboxyliques comprenant jusqu'à 20 atomes de carbone, les halogénures de vinyle comprenant jusqu'à 10 atomes de carbone et les vinyléthers d'alcools contenant 1 à 10 atomes de carbone,
(E2) éventuellement au moins un acide carboxylique éthyléniquement α,β-insaturé,
(F2) éventuellement au moins un agent de réticulation et
(G2) éventuellement au moins un composé choisi dans le groupe constitué par l'ester 2-(2-oxoimidazolidin-1-yl)-éthylique de l'acide (méth)acrylique ((méth)acrylate d'uréidoéthyle), l'acrylate d'acétoacétoxyéthyle, le méthacrylate d'acétoacétoxypropyle, le méthacrylate d'acétoacétoxybutyle, le méthacrylate de 2-(acétoacétoxy)éthyle, le diacétonacrylamide (DAAM) et le diacétoneméthacrylamide,
(H2) éventuellement au moins un composé présentant un groupe (méth)acrylate et un groupe époxy et
(I2) éventuellement au moins un amide d'acide carboxylique éthyléniquement α,β-insaturé,
éventuellement suivie d'une ou de plusieurs étapes de polymérisation par voie radicalaire d'au moins un monomère,
la quantité dudit au moins un émulsifiant étant de 0,1 à 3,5% en poids par rapport à la quantité totale des monomères polymérisables par voie radicalaire introduits en dosant dans toutes les étapes dans la polymérisation par voie radicalaire,
étant entendu que
- le rapport pondéral de la somme des monomères de la première étape (A41) à (I1) à la somme des monomères des étapes consécutives (A2) à (I2) soit de 5:95 à 70:30,
- le produit obtenu de la dernière étape présente une grosseur de particules de 50 à 300 nm,
- l'indice d'acide du produit de la dernière étape ne soit pas supérieur à l'indice d'acide du produit de la première étape et
- l'indice d'hydroxy du produit de la dernière étape ne soit pas supérieur à l'indice d'hydroxy du produit de la première étape.

2. Masse de revêtement selon la revendication 1, **caractérisée en ce que** le monomère (A2) est choisi dans le groupe constitué par le méthacrylate de méthyle, l'acrylate de méthyle, l'acrylate d'éthyle, l'acrylate de n-butyle, l'acrylate de 2-éthylhexyle et l'acrylate de 3-propylheptyle.

3. Masse de revêtement selon l'une quelconque des revendications précédentes, **caractérisée en ce que** le monomère (B2) est choisi dans le groupe constitué par le styrène et l'α-méthylstyrène.

4. Masse de revêtement selon l'une quelconque des revendications précédentes, **caractérisée en ce que** le monomère (C1) est choisi dans le groupe constitué par l'ester 2-hydroxyéthylique de l'acide (méth)acrylique, l'ester 2-hydroxypropylique de l'acide (méth)acrylique et l'ester 3-hydroxypropylique de l'acide (méth)acrylique.

5. Masse de revêtement selon l'une quelconque des revendications précédentes, **caractérisée en ce qu'**un monomère (G1) est présent et qu'il s'agit du diacétonacrylamide.

6. Masse de revêtement selon l'une quelconque des revendications précédentes, **caractérisée en ce qu'**il s'agit, pour l'émulsifiant, d'un émulsifiant ionique.

7. Masse de revêtement selon l'une quelconque des revendications précédentes, **caractérisée en ce qu'**elle présente une température de formation de film minimale qui n'est pas supérieure à 5°C.

8. Masse de revêtement selon l'une quelconque des revendications précédentes, **caractérisée en ce que** le copolymère obtenu de la première étape présente une température de transition vitreuse de 40 à 150°C et le produit obtenu de la deuxième étape présente une température de transition vitreuse inférieure d'au moins 40°C.

9. Masse de revêtement selon l'une quelconque des revendications 1 à 7, **caractérisée en ce que** le copolymère obtenu de la première étape présente une température de transition vitreuse qui n'est pas supérieure à 0°C et le produit obtenu de la deuxième étape présente une température de transition vitreuse qui n'est pas supérieure à 0°C.

10. Procédé pour la préparation de dispersions de polymères selon la revendication 1, **caractérisé en ce qu'**on
- réalise une polymérisation en émulsion au moins en deux étapes,
- dans laquelle on réalise, dans une première étape, la transformation de
(A1) au moins un ester alkylique de l'acide (méth)acrylique,
(B1) éventuellement au moins un aromatique de vinyle comprenant jusqu'à 20 atomes de carbone,
(C1) au moins (méth)acrylate d'hydroxyalkyle comprenant un groupe alkylène comprenant un à dix atomes de carbone,
(D1) éventuellement au moins un composé polymérisable par voie radicalaire choisi dans le groupe constitué par les nitriles éthyléniquement insaturés comprenant jusqu'à 20 atomes de carbone, les esters de vinyle d'acides carboxyliques comprenant jusqu'à 20 atomes de carbone, les halogénures de vinyle comprenant jusqu'à 10 atomes de carbone et les vinyléthers d'alcools contenant 1 à 10 atomes de carbone,
(E1) éventuellement au moins un acide carboxylique éthyléniquement α,β-insaturé,
(F1) éventuellement au moins un agent de réticulation,
(G1) éventuellement au moins un composé choisi dans le groupe constitué par l'ester 2-(2-oxoimidazolidin-1-yl)-éthylique de l'acide (méth)acrylique ((méth)acrylate d'uréidoéthyle), l'acrylate d'acétoacétoxyéthyle, le méthacrylate d'acétoacétoxypropyle, le méthacrylate d'acétoacétoxybutyle, le méthacrylate de 2-(acétoacétoxy)éthyle, le diacétonacrylamide (DAAM) et le diacétoneméthacrylamide,
(H1) éventuellement au moins un composé présentant un groupe (méth)acrylate et un groupe époxy et
(I1) éventuellement au moins un amide d'acide carboxylique éthyléniquement α,β-insaturé,
en présence d'au moins un initiateur et en présence d'au moins un émulsifiant ainsi qu'éventuellement en présence d'au moins un agent de régulation,
à condition que le copolymère obtenu de la première étape
- présente un indice d'acide selon la norme DIN EN ISO 3682 (par potentiométrie) qui n'est pas supérieur à 10 mg KOH/g polymère,
- présente un indice d'hydroxy selon la norme DIN 53240-2 (par potentiométrie à un temps d'acétylation de 20 minutes) de 2 à 100 mg KOH/g polymère,
- présente une grosseur de particules de 20 à 80 nm et
- présente un poids moléculaire pondéral moyen, déterminé via une chromatographie par exclusion de tailles avec du tétrahydrofuranne + 0,1% en poids d'acide trifluoroacétique comme éluant à une vitesse d'écoulement de 1 ml/min et une température de colonne de 35°C, de 5000 à 50 000 g/mole
et la somme des monomères (C1) et (I1) vaut 0,5 à 20% en poids,
suivie d'une polymérisation par voie radicalaire dans une étape consécutive en présence du copolymère préparé dans la première étape de
(A2) au moins un ester alkylique de l'acide (méth)acrylique,
(B2) éventuellement au moins un aromatique de vinyle comprenant jusqu'à 20 atomes de carbone,
(C2) éventuellement au moins un (méth)acrylate d'hydroxyalkyle comprenant un groupe alkylène comprenant un à dix atomes de carbone,
(D2) éventuellement au moins un composé polymérisable par voie radicalaire choisi dans le groupe constitué par les nitriles éthyléniquement insaturés comprenant jusqu'à 20 atomes de carbone, les esters de vinyle d'acides carboxyliques comprenant jusqu'à 20 atomes de carbone, les halogénures de vinyle comprenant jusqu'à 10 atomes de carbone et les vinyléthers d'alcools contenant 1 à 10 atomes de carbone,
(E2) éventuellement au moins un acide carboxylique éthyléniquement α,β-insaturé,
(F2) éventuellement au moins un agent de réticulation et
(G2) éventuellement au moins un composé choisi dans le groupe constitué par l'ester 2-(2-oxoimidazolidin-1-yl)-éthylique de l'acide (méth)acrylique ((méth)acrylate d'uréidoéthyle), l'acrylate d'acétoacétoxyéthyle, le méthacrylate d'acétoacétoxypropyle, le méthacrylate d'acétoacétoxybutyle, le méthacrylate de 2-(acétoacétoxy)éthyle, le diacétonacrylamide (DAAM) et le diacétoneméthacrylamide,
(H2) éventuellement au moins un composé présentant un groupe (méth)acrylate et un groupe époxy et
(I2) éventuellement au moins un amide d'acide carboxylique éthyléniquement α,β-insaturé,
éventuellement suivie d'une ou de plusieurs étapes de polymérisation par voie radicalaire d'au moins un monomère,
la quantité dudit au moins un émulsifiant étant de 0,1 à 3,5% en poids par rapport à la quantité totale des monomères polymérisables par voie radicalaire introduits en dosant dans toutes les étapes dans la polymérisation par voie radicalaire,
étant entendu que
- le rapport pondéral de la somme des monomères de la première étape (A1) à (I1) à la somme des monomères des étapes consécutives (A2) à (I2) soit de 5:95 à 70:30,
- le produit obtenu de la dernière étape présente une grosseur de particules de 50 à 300 nm,
- l'indice d'acide du produit de la dernière étape ne soit pas supérieur à l'indice d'acide du produit de la première étape et
- l'indice d'hydroxy du produit de la dernière étape ne soit pas supérieur à l'indice d'hydroxy du produit de la première étape.

11. Utilisation de masses de revêtement selon la revendication 8 pour des revêtements à un ou deux composants de matériau synthétique, de bois, de papier et de métal.

12. Utilisation de masses de revêtement selon la revendication 9 comme adhésif.
